# EUROPEAN PATENT APPLICATION

(11) **EP 3 121 881 A1**
(43) Date of publication of application: **25.01.2017**
(21) Application number: 14885961.4
(22) Date of filing: 19.03.2014
(51) Int. Cl.: H01M 4/58, H01M 2/02, H01M 2/10, H01M 4/485, H01M 10/0566, H01M 10/0587

(54) **NONAQUEOUS ELECTROLYTE SECONDARY BATTERY, ASSEMBLED BATTERY AND BATTERY PACK**

(71) Applicant: Kabushiki Kaisha Toshiba, Minato-ku Tokyo 105-8001 (JP)
(72) Inventor: ISOZAKI Yoshiyuki, Tokyo 105-8001 (JP); TAKAMI Norio, Tokyo 105-8001 (JP); MATSUNO Shinsuke, Tokyo 105-8001 (JP); HARADA Yasuhiro, Tokyo 105-8001 (JP)
(74) Representative: Hoffmann Eitle
(86) International application number: PCT/JP2014/057473
(87) International publication number: WO 2015/140952

(57) **Abstract**

A nonaqueous electrolyte secondary battery (1) includes a 1st electrode group (2) and a 2nd electrode group (3) which are obtained by laminating a positive electrode, a negative electrode and a separator; a nonaqueous electrolyte; an exterior material (7) which encloses the 1st electrode group (2), the 2nd electrode group (3) and the nonaqueous electrolyte; a positive electrode lead (4) which is connected to the 1 st electrode group (2); a negative electrode lead (5) which is connected to the 2nd electrode group (3); and a connection lead (6) which connects the 1st electrode group (2) and the 2nd electrode group (3), wherein the exterior material (7) includes a 1st housing part which houses the 1st electrode group (2), a 2nd housing part which houses the 2nd electrode group (3), and a connection part (8C) which connects the 1 st housing part and the 2nd housing part.

## Description

### [Field]

Embodiments described herein relate generally to a nonaqueous electrolyte secondary battery, an assembled battery and a battery pack.

### [Background]

In recent years, the active research and development have been carried out on a nonaqueous electrolyte secondary battery, in which charge and discharge is carried out through the movement of a lithium ion between a negative electrode and a positive electrode, as a high energy density battery. This type of nonaqueous electrolyte secondary battery is expected as a large electric power source particularly for an electric vehicle or a hybrid vehicle using an engine and a motor in combination from the viewpoint of environmental problems. In addition to a vehicle field, a nonaqueous electrolyte secondary battery for a large electric power source is attracting attention in other fields.

As an example of a nonaqueous electrolyte secondary battery, a lithium ion secondary battery can be exemplified, but in most lithium ion secondary batteries, lithium cobalt oxide (LiCoO₂), lithium manganese oxide (LiMn₂O₄) or the like is used for a positive electrode, and a graphite-based material is used for a negative electrode. The nonaqueous electrolyte secondary battery having such combination is mostly used at a voltage of 3 V to 4.2 V, and the average operating voltage is about 3.7 V. In order to use this nonaqueous electrolyte secondary battery as a large electric power source, it is necessary to connect several pieces of batteries in series and increase the voltage to several hundreds V or more according to a use application.

A lithium ion secondary battery has a high energy density, but the safety thereof has been considered problematic. In order to improve the safety, a lithium ion secondary battery is subjected to various modifications and improvements. However, in a lithium ion secondary battery, metal lithium is likely to precipitate on the surface of a graphite-based material of a negative electrode particularly during overcharge. Moreover, oxygen is likely to be released from lithium cobalt oxide at a positive electrode during overcharge. This oxygen is a factor that causes thermal runaway.

In recent years, a lithium-titanium composite oxide having a higher lithium insertion and extraction potential than a carbonaceous material has been attracting attention. In a lithium-titanium composite oxide, metal lithium does not precipitate in principle at a lithium insertion and extraction potential, and also, there are the advantages in that a lithium-titanium composite oxide is excellent in rapid charge, a low-temperature performance and safety.

However, a lithium-titanium composite oxide is characterized by the high lithium insertion and extraction potential thereof, and thus, the voltage of a cell determined by the combination of a positive electrode and a negative electrode decreases to about 2 V For this reason, it is necessary to connect 1.5 times as many cells as a conventional lithium ion secondary battery in series in order to obtain the same voltage as a conventional lithium ion secondary battery in the cell prepared by using a lithium-titanium composite oxide for a negative electrode. This results the increase in the cost and the number of components for connecting a plurality of cells in series.

By the way, known is the electric storage module in which plural electric storage units are sealed in the state where they are spaced apart from one another and are arranged in a line between the adhesive surfaces of laminated sealing films. On the adhesive surface side of the sealing film, plural concave parts are formed to respectively house plural electric storage units. Also, the plural concave parts include a 1 st concave part group and a 2nd concave part group. A 1st concave part group is arranged in a line so as to house a 1 st electric storage unit group, and is comprised of odd-numbered electric storage units of the plural electric storage units arranged in a line. A 2nd concave part group is arranged in a line so as to house a 2nd electric storage unit group, and is comprised of even-numbered electric storage units of the plural electric storage units arranged in a line. In the state before stacking the adhesive surfaces of the sealing films, the formation ranges of the 1 st concave part group and the distances of respective spaced parts of the 1 st concave part group do not overlap with the formation ranges of the 2nd concave part group and the distances of respective spaced parts of the 2nd concave part group. The plural electric storage units are respectively a battery structure including a positive electrode and a negative electrode. Plural battery structures are electrically connected in series along an arrangement direction.

Also, known is the electric storage component module including electric storage components, which store and release an electric power, and a case integrally formed by sealing adjacent electric storage components in an isolated state. The case is formed by sealing the part of the laminated films corresponding to the outer peripheral part of the electric storage components in the state where the plural electric storage components are arranged between the laminated films. Moreover, the laminated films are formed by folding one sheet of film.

Also, known is the laminated battery obtained by packaging an electrode group, in which a positive electrode plate and a negative electrode plate are laminated through a separator, with a laminate film, in which a resin layer is provided on at least the inside of a metal layer, and sealing this laminate film around a housing part housing the electrode group, to thereby seal a electrolyte solution and an electrode group and form a battery structure part. The plural housing parts are formed on the laminate film, and the respective housing parts, in which the electrode group and the electrolyte solution are housed, are sealed at the peripheries thereof, to thereby form the plural battery structure parts. Also, the sealed part of the laminate film is shared by the adjacent battery structure parts. Also, the laminate film is folded at the sealed part between the plural battery structure parts, to thereby stack the battery structure parts located at both sides of the folded sealed part.

### [Brief Description of Drawings]

FIG. 1A is a schematic plan view illustrating the nonaqueous electrolyte secondary battery of the 1 st embodiment.
FIG. 1B is a schematic cross-sectional view illustrating the nonaqueous electrolyte secondary battery of the 1st embodiment.
FIG. 2 is a schematic plan view illustrating the exterior material of the nonaqueous electrolyte secondary battery of the 1st embodiment.
FIG. 3 is a schematic plan view illustrating the electrode group of the nonaqueous electrolyte secondary battery of the 1 st embodiment.
FIG. 4 is an enlarged schematic cross-sectional view illustrating the part α of FIG. 3.
FIG. 5A is a schematic plan view illustrating the nonaqueous electrolyte secondary battery of the 1 st embodiment.
FIG. 5B is a schematic cross-sectional view illustrating the nonaqueous electrolyte secondary battery of the 1st embodiment.
FIG. 6A is a schematic plan view illustrating the nonaqueous electrolyte secondary battery of the 1 st embodiment.
FIG. 6B is a schematic cross-sectional view illustrating the nonaqueous electrolyte secondary battery of the 1st embodiment.
FIG. 7A is a schematic plan view illustrating the nonaqueous electrolyte secondary battery of the 1 st embodiment.
FIG. 7B is a schematic cross-sectional view illustrating the nonaqueous electrolyte secondary battery of the 1st embodiment.
FIG. 8 is a schematic view illustrating the nonaqueous electrolyte secondary battery of the 1 st embodiment.
FIG. 9 is a schematic view illustrating the nonaqueous electrolyte secondary battery of the 1 st embodiment.
FIG. 10A is a schematic plan view illustrating the nonaqueous electrolyte secondary battery of the 2nd embodiment.
FIG. 10B is a schematic cross-sectional view illustrating the nonaqueous electrolyte secondary battery of the 2nd embodiment.
FIG. 11A is a schematic plan view illustrating the nonaqueous electrolyte secondary battery of the 2nd embodiment.
FIG. 11B is a schematic cross-sectional view illustrating the nonaqueous electrolyte secondary battery of the 2nd embodiment.
FIG. 12A is a schematic plan view illustrating the nonaqueous electrolyte secondary battery of the 2nd embodiment.
FIG. 12B is a schematic cross-sectional view illustrating the nonaqueous electrolyte secondary battery of the 2nd embodiment.
FIG. 13A is a schematic plan view illustrating the nonaqueous electrolyte secondary battery of the 3rd embodiment.
FIG. 13B is a schematic plan view illustrating the nonaqueous electrolyte secondary battery of the 3rd embodiment.
FIG. 14A is a schematic plan view illustrating the nonaqueous electrolyte secondary battery of the 4th embodiment.
FIG. 14B is a schematic cross-sectional view illustrating the nonaqueous electrolyte secondary battery of the 4th embodiment.
FIG. 15A is a schematic plan view illustrating the exterior material of the nonaqueous electrolyte secondary battery of the 4th embodiment.
FIG. 15B is a schematic plan view illustrating the exterior material of the nonaqueous electrolyte secondary battery of the 4th embodiment.
FIG. 15C is a schematic side view illustrating the exterior material of the nonaqueous electrolyte secondary battery of the 4th embodiment.
FIG. 16 is a schematic plan view illustrating the nonaqueous electrolyte secondary battery of the 4th embodiment.
FIG. 17A is a schematic side view illustrating the assembled battery of the 5th embodiment.
FIG. 17B is a schematic plan view illustrating the assembled battery of the 5th embodiment.
FIG. 18A is a schematic side view illustrating the assembled battery of the 6th embodiment.
FIG. 18B is a schematic plan view illustrating the assembled battery of the 6th embodiment.
FIG. 19A is a schematic side view illustrating the assembled battery of the 7th embodiment.
FIG. 19B is a schematic side view illustrating the assembled battery of the 7th embodiment.
FIG. 20 is a schematic cross-sectional view illustrating the assembled battery of the 8th embodiment.
FIG. 21 is a schematic plan view illustrating the assembled battery of the 9th embodiment.
FIG. 22 is a schematic side view illustrating the assembled battery of the 9th embodiment.
FIG. 23A is a schematic cross-sectional view illustrating the assembled battery of the 9th embodiment.
FIG. 23B is a schematic cross-sectional view illustrating the assembled battery of the 9th embodiment.
FIG. 24A is a schematic plan view illustrating the assembled battery of the 10th embodiment.
FIG. 24B is a schematic cross-sectional view illustrating the assembled battery of the 10th embodiment.
FIG. 25 is a perspective view illustrating the assembled battery of the 10th embodiment.
FIG. 26A is a schematic plan view illustrating the assembled battery of the 11th embodiment.
FIG. 26B is a schematic cross-sectional view illustrating the assembled battery of the 11th embodiment.
FIG. 27A is a schematic plan view illustrating the linking member of the assembled battery of the 11th embodiment.
FIG. 27B is a schematic side view illustrating the linking member of the assembled battery of the 11th embodiment.
FIG. 28 is a schematic view illustrating the battery pack of the 12th embodiment.

### [Detailed Description]

The nonaqueous electrolyte secondary battery of the embodiment includes a 1st electrode group and a 2nd electrode group; a nonaqueous electrolyte; an exterior material; a positive electrode lead; a negative electrode lead; and a connection lead.

The 1 st electrode group and the 2nd electrode group are obtained by laminating a positive electrode, a negative electrode and a separator.

The positive electrode contains an iron-containing phosphorus compound which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2).

The negative electrode contains a titan-containing oxide.

The separator is interposed between the positive electrode and the negative electrode.

The exterior material encloses the 1st electrode group, the 2nd electrode group and the nonaqueous electrolyte.

The positive electrode lead is connected to a positive electrode of the 1st electrode group and extends to an outside of the exterior material.

The negative electrode lead is connected to a negative electrode of the 2nd electrode group and extends to an outside of the exterior material.

The connection lead connects a negative electrode of the 1 st electrode group and a positive electrode of the 2nd electrode group.

The exterior material includes a 1st housing part which houses the 1st electrode group, a 2nd housing part which houses the 2nd electrode group, and a connection part which connects the 1st housing part and the 2nd housing part.

Hereinafter, the embodiment is described with reference to the drawings.

### (First Embodiment)

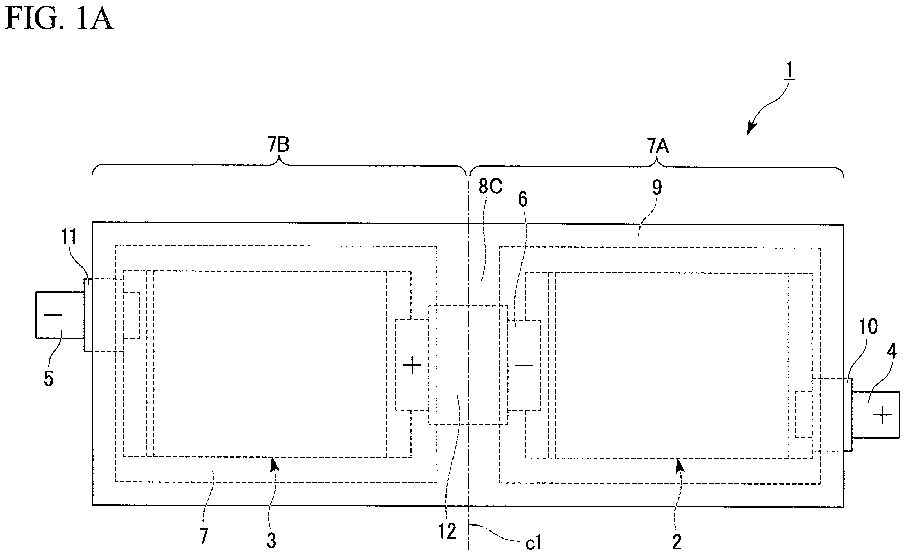

Hereinafter, the 1st embodiment is described with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9.

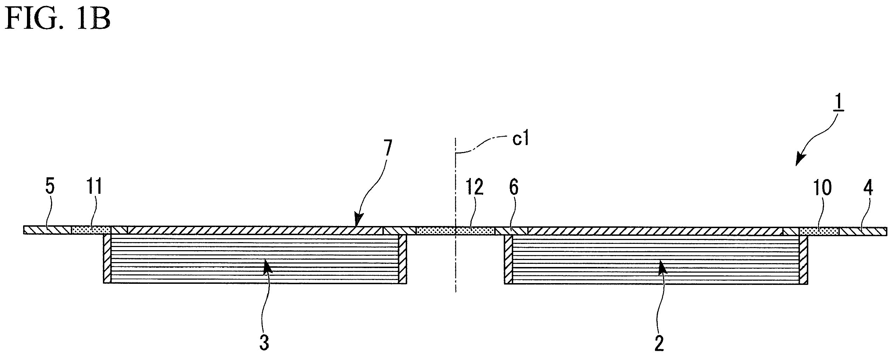

As shown in FIG. 1A and FIG. 1B, the nonaqueous electrolyte secondary battery 1 of the 1st embodiment includes the 1st electrode group 2, the 2nd electrode group 3, the positive electrode lead 4 connected to the positive electrode of the 1st electrode group 2; the negative electrode lead 5 connected to the negative electrode of the 2nd electrode group 3; and the connection lead 6 connecting the 1st electrode group 2 and the 2nd electrode group 3 in series, and the exterior material 7 housing the 1 st electrode group 2, the 2nd electrode group 3, the positive electrode lead 4, the negative electrode lead 5 and the connection lead 6.

As the exterior material 7, a laminate film can be used.

The shape of the nonaqueous electrolyte secondary battery 1 is not limited to a rectangular shape, and can be various shapes such as a flat shape (a thin shape).

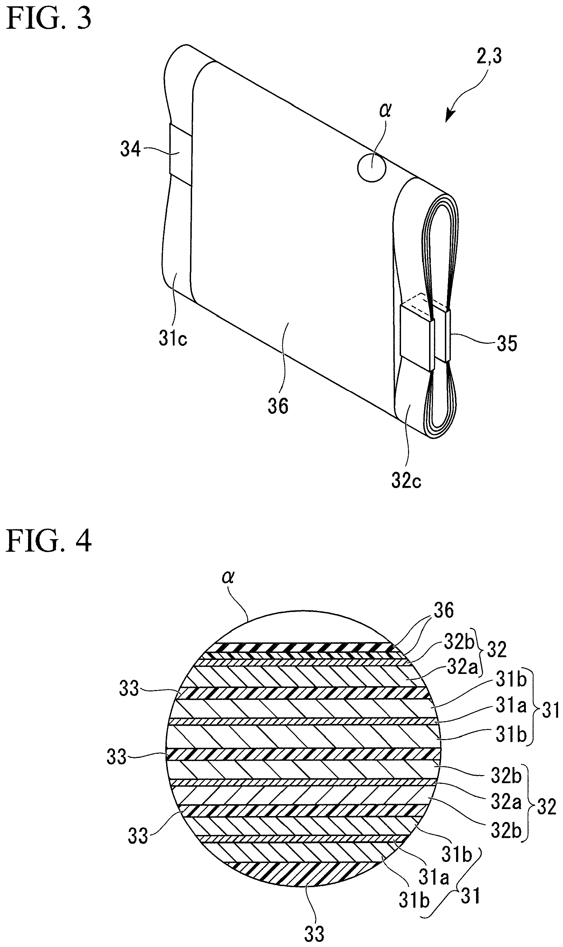

As shown in FIG. 3 and FIG. 4, the 1st electrode group 2 and the 2nd electrode group 3 have a flat-shaped wound-type structure in which the positive electrode 31, the negative electrode 32 and the separator 33 which separates the positive electrode 31 and negative electrode 32 are laminated and spirally wound. Also, the nonaqueous electrolytes which are not illustrated are held in the 1st electrode group 2 and the 2nd electrode group 3.

Also, the negative electrodes 32 are located at the outermost peripheries of the 1st electrode group 2 and the 2nd electrode group 3. The separator 33, the positive electrode 31, the separator 33, the negative electrode 32, the separator 33, the positive electrode 31 and the separator 33 are located in this order on the side of the inner periphery of the negative electrode 32.

Also, the shapes of the 1st electrode group 2 and the 2nd electrode group 3 are not limited to a flat shape, and can be, for example, a cylindrical shape or a stacked shape.

As shown in FIG. 4, the positive electrode 31 includes the strip-shaped positive electrode current collector 31a and the positive electrode layers 31b that are formed on both surfaces of the positive electrode current collector 31a. Also, the negative electrode 32 includes the strip-shaped negative electrode current collector 32a and the negative electrode layers 32b that are formed on both surfaces of the negative electrode current collector 32a. The negative electrode layer 32b is formed on one surface of the negative electrode current collector 32a at the portion located at the outermost periphery of the negative electrode 32.

The 1 st electrode group 2 and the 2nd electrode group 3 can be obtained by laminating the strip-shaped positive electrode 31, the strip-shaped negative electrode 32 and the separator 33 interposed between these electrodes so as to form the electrode group assembly, spirally winding this electrode group assembly, and subsequently pressing this in a flat shape.

The positive electrode material-unsupported part 31 c, in which the positive electrode layer 31b is not formed, is formed on one side in the width direction of the positive electrode current collector 31a. Also, the negative electrode material-unsupported part 32c, in which the negative electrode layer 32b is not formed, is formed on one side in the width direction of the negative electrode current collector 32a. Further, when the positive electrode 31 and negative electrode 32 are wound, the positive electrode material-unsupported part 31c is arranged so as to extend to one side of the axial direction of the winding axis of the 1 st electrode group 2 and the 2nd electrode group 3. Also, the negative electrode material-unsupported part 32c is arranged so as to extend to the other side of the axial direction of the winding axis of the 1st electrode group 2 and the 2nd electrode group 3.

As shown in FIG. 3, the positive electrode material-unsupported part 31c is equipped with the positive electrode current collector tab 34. The positive electrode current collector tab 34 is the member which has a current collecting function and bundles the positive electrode material-unsupported part 31c which is the end part of the spirally wound positive electrode current collector 31a. This positive electrode current collector tab 34 is electrically connected to the positive electrode lead 4 and the connection lead 6. In the same manner, the negative electrode material-unsupported part 32c is equipped with the negative electrode current collector tab 35. The negative electrode current collector tab 35 is the member which has a current collecting function and bundles the negative electrode material-unsupported part 32c which is the end part of the spirally wound negative electrode current collector 32a. This negative electrode current collector tab 35 is electrically connected to the negative electrode lead 5 and the connection lead 6. Also, the positive electrode current collector tab 34 and the negative electrode current collector tab 35 are arranged so as not to exist on the same straight line with each other. For example, the positive electrode current collector tab 34 is arranged on the other side in the width direction of the positive electrode current collector 31a. On the other hand, the negative electrode current collector tab 35 is arranged on one side in the width direction of the negative electrode current collector 32a.

As shown in FIG. 1A and FIG. 1B, the positive electrode lead 4 and the negative electrode lead 5 extend from the 1st electrode group 2 and the 2nd electrode group 3 in opposite directions to each other.

For example, a method such as ultrasonic welding can be employed for the welding of the positive electrode material-unsupported part 31c and the positive electrode current collector tab 34, the welding of the negative electrode material-unsupported part 32c and the negative electrode current collector tab 35, the welding of the positive electrode current collector tab 34 and the positive electrode lead 4 or the connection lead 6, and the welding of the negative electrode current collector tab 35 and the negative electrode lead 5 or the connection lead 6.

Furthermore, as shown in FIG. 3, the 1st electrode group 2 and the 2nd electrode group 3 are wound by the insulating tape 36. The insulating tape 36 is used to wind the 1st electrode group 2 and the 2nd electrode group 3 around the position except for the both ends of the winding axis. In this manner, the insulating tape 36 is used to wind the position except for the positive electrode material-unsupported part 31c, the negative electrode material-unsupported part 32c, the positive electrode current collector tab 34 and the negative electrode current collector tab 35.

Herein, the shape of the 1st electrode group 2 and the 2nd electrode group 3 is not limited to the structure as described in the embodiment, and it is possible to employ electrode groups having the other various shapes.

For example, in the case of a stack type electrode group, the electrode group can be prepared by housing a positive electrode or a negative electrode in a bag-shaped separator and alternately stacking these respective electrodes, or by alternately sandwiching a positive electrode and a negative electrode while arranging a strip-shaped separator in a switchback shape.

Also, the positive electrode current collector 31 a, the positive electrode layer 31b, the negative electrode current collector 32a, the negative electrode layer 32b and the separator 33, which constitute the 1st electrode group 2 and the 2nd electrode group 3, is described below in details.

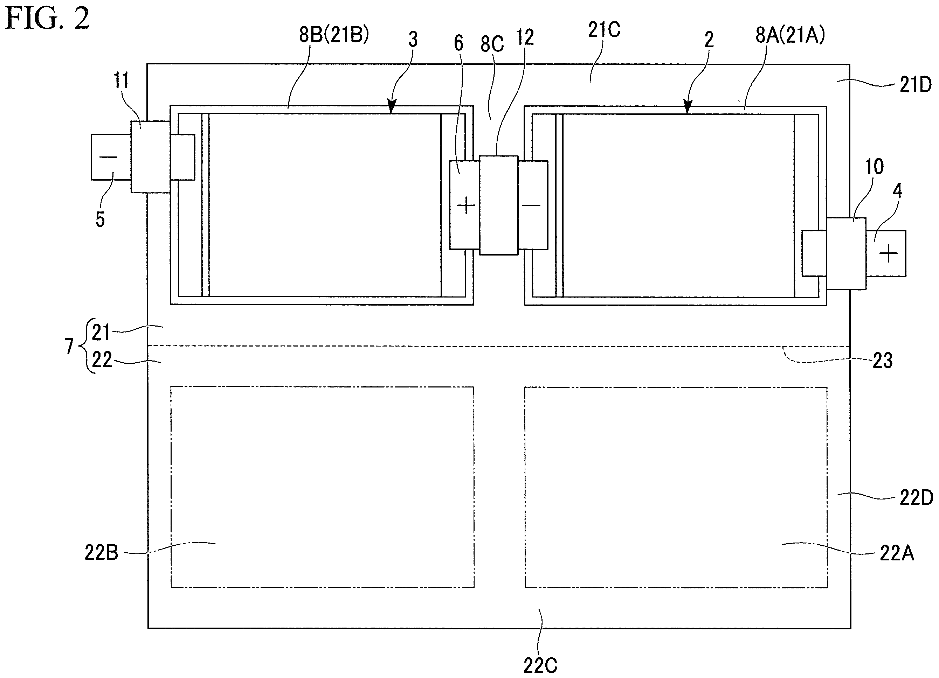

As shown in FIG. 1A and FIG. 2, the exterior material 7 is comprised of the 1st casing unit 21 having a substantially rectangular planer shape and the rectangular plate-shaped 2nd casing unit 22 having a principal surface facing the 1st casing unit 21. In the example shown in FIG. 2, the exterior material 7 is foldable through the folding part 23, and the 1st casing unit 21 and the 2nd casing unit 22 are connected to each other through the folding part 23. Herein, the 1st casing unit 21 and the 2nd casing part 22 are not necessarily connected and can be separate members.

Also, the exterior material 7 shown in FIG. 1A and FIG. 2 includes the 1 st housing part 8A which houses the 1 st electrode group 2, the 2nd housing part 8B which houses the 2nd electrode group 3, and the connection part 8C which connects the 1 st housing part 8A and the 2nd housing part 8B, and the sealing part 9 which seals the 1st housing part 8A and the 2nd housing part 8B. Also, the exterior material 7 is comprised of the 1 st region 7A which houses the 1 st electrode group 2 and the 2nd region 7B which houses the 2nd electrode group 3.

The 1 st housing part 8A, the 2nd housing part 8B, the connection part 8C and the sealing part 9 are formed by integrating the 1st casing unit 21 and the 2nd casing unit 22.

Hereinafter, the 1st casing unit 21 and the 2nd casing unit 22 are described.

The exterior material 7 comprised of the 1st casing unit 21 and the 2nd casing unit 22 is formed of a laminate film. A laminate film is a multilayer film including a metal layer and a resin layer covering the metal layer.

The 1st casing unit 21 is formed by subjecting a laminate film to a deep drawing process or press working. The 1st casing unit 21 includes the housing part 21A and the housing part 21B which are a rectangular concave part, and the plate-shaped extending part 21C provided so as to extend from the four sides defining the housing part 21A and the housing part 21B toward the outer periphery of a laminate film. Also, the outer peripheral part (extending part 21C) of a laminate film forming the 1st casing unit 21, which is other than the folding part 23, becomes the sealing part 21D.

The 2nd casing unit 22 is formed of a laminate film, and is arranged so as to face the 1st casing unit 21 when the exterior material 7 is formed by using the second casing unit. This 2nd casing unit 22 includes the plate-shaped cap part 22A facing the housing part 21A of the 1st casing unit 21, the plate-shaped cap part 22B facing the housing part 21B of the 1st casing unit 21, and the plate-shaped extending part 22C provided so as to extend from the four sides defining the cap part 22A and the cap part 22B toward the outer periphery of a laminate film. Also, the outer peripheral part (extending part 22C) of a laminate film forming the 2nd casing unit 22, which is other than the folding part 23, becomes the sealing part 22D.

The exterior material 7 is formed by laminating the 1 st casing unit 21 and the 2nd casing unit 22 so as to face each other, stacking and heat-sealing the sealing part 21D and the sealing part 22D so as to integrate the 1 st casing unit 21 and the 2nd casing unit 22. Also, the 1st housing part 8A is configured by integrating the housing parts 21A and the cap part 22A. Also, the 2nd housing part 8B is configured by integrating the housing parts 21B and the cap part 22B. Also, the connection part 8C, which connects the 1 st housing part 8A and the 2nd housing part 8B, is formed by heat-sealing the part connecting the 1st housing part 8A and the 2nd housing part 8B in the outer peripheral parts of the 1 st casing unit 21 and the 2nd casing unit 22. Moreover, the sealing part 9, which seals the 1 st housing part 8A and the 2nd housing part 8B, is formed by heat-sealing the sealing part 21D and the sealing part 22D which are the outer peripheral parts of the 1st casing unit 21 and the 2nd casing unit 22.

Also, the connection part 8C is the common sealing part which collectively seals the 1 st housing part 8A and the 2nd housing part 8B.

It is preferable that at least the part of the surface of the positive electrode lead 4, which passes through the sealing part 9, be coated with the thermoplastic resin layer 10. When preparing this structure, the thermoplastic resin layer 10 adheres to the positive electrode lead 4 through thermal bonding, and the thermoplastic resin layer 10 adheres to the exterior material 7 through thermal bonding. Thus, it is possible to prevent the electrolyte housed in the exterior material 7 from permeating and leaking. Also, the exterior material 7 and the positive electrode lead 4 are insulated by the thermoplastic resin layer 10, and thus, it is possible to prevent a short circuit due to the contact between the positive electrode lead 4 and the exterior material 7.

The thickness of the thermoplastic resin layer 10 (per one surface of the positive electrode lead 4) is preferably within a range of 40 µm to 200 µm, and more preferably a range of 60 µm to 100 µm.

It is preferable that at least the part of the surface of the negative electrode lead 5, which passes through the sealing part 9, be coated with the thermoplastic resin layer 11. When preparing this structure, the thermoplastic resin layer 11 adheres to the negative electrode lead 5 through thermal bonding, and the thermoplastic resin layer 11 adheres to the exterior material 7 through thermal bonding. Thus, it is possible to prevent the electrolyte housed in the exterior material 7 from permeating and leaking. Also, the exterior material 7 and the negative electrode lead 5 are insulated by the thermoplastic resin layer 11, and thus, it is possible to prevent a short circuit due to the contact between the negative electrode lead 5 and the exterior material 7.

The thickness of the thermoplastic resin layer 11 (per one surface of the negative electrode lead 5) is preferably within a range of 40 µm to 200 µm, and more preferably a range of 60 µm to 100 µm.

It is preferable that at least the part of the surface of the connection lead 6, which passes through the connection part 8C, be coated with the thermoplastic resin layer 12. When preparing this structure, the thermoplastic resin layer 12 adheres to the connection lead 6 through thermal bonding, and the thermoplastic resin layer 12 adheres to the exterior material 7 through thermal bonding. Thus, it is possible to prevent the electrolyte housed in the exterior material 7 from permeating and leaking. Also, the exterior material 7 and the connection lead 6 are insulated by the thermoplastic resin layer 12, and thus, it is possible to prevent a short circuit due to the contact between the connection lead 6 and the exterior material 7.

The thickness of the thermoplastic resin layer 12 (per one surface of the connection lead 6) is preferably within a range of 40 µm to 200 µm, and more preferably a range of 60 µm to 100 µm.

The following detailed description relates to the constituent members of the nonaqueous electrolyte secondary battery 1 of the present embodiment including the positive electrode lead 4, the negative electrode lead 5, the connection lead 6, the exterior material 7, the thermoplastic resin layers 10, 11, 12, the positive electrode 31, the negative electrode 32, the separator 33, and the nonaqueous electrolyte (not illustrated).

### (1) Positive Electrode

The positive electrode 31 includes the positive electrode current collector 31a and the positive electrode layer 31b that is formed on one surface or both surfaces of the positive electrode current collector 31a and includes a positive electrode active material, an electroconductive agent and a binder. An electroconductive agent and a binder are optional components.

As a positive electrode active material, it is possible to use the iron-containing phosphorus compound which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2).

Of these, preferable examples of a positive electrode active material include lithium iron phosphate (LixFePO₄).

In the positive electrode containing the iron-containing phosphorus compound as the positive electrode active material, which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2), a film is hardly grown on the surface of the positive electrode during high-temperature storage, and the resistance increase is small during storage. Also, it is possible to improve the storage performance under a high temperature environment.

When y represents 0.2 or less, it is possible to moderate the sharp change within a range of 4 V or more and 5 V or less of the voltage of the nonaqueous electrolyte secondary battery 1. Also, it is possible to suppress the capacity decrease due to the deviation of the battery capacity balance, and the excellent cycle life performance can be obtained. It is preferable that y represent 0.05 or more and 0.15 or less. By setting this range, it is possible to further moderate the increase within a range of 4.5 V or more and 5 V or less of the voltage of the nonaqueous electrolyte secondary battery 1. Also, it is possible to cancel the overcharged state due to the deviation of the battery capacity balance. Also, it is possible to suppress the effect of the gas generation due to the oxidative decomposition of the nonaqueous electrolyte, and the cycle life performance is improved.

Even though the iron-containing phosphorus compound, which has an olivine structure and is represented by LiₓFe_{1-y}Mn_{y}A_{z}PO₄, contains lithium during the synthesis, the lithium amount x can be zero during a charge process after the synthesis.

The average primary particle size (diameter) of the phosphorus compound particles is preferably 500nm or less, and more preferably 50 nm to 200 nm. When the average primary particle size of the phosphorus compound particles is within this range, the influences of the electron conduction resistance of the active material and the diffusion resistance of a lithium ion become small, and the output performance is improved. Also, primary particles can be aggregated to form a secondary particle. The average particle diameter of the secondary particles is preferably 10 µm or less.

It is preferable that at least a part of the particle surface of the phosphorus compound particle be coated with a carbon-containing layer. It is preferable that the carbon-containing layer have an average thickness of 10 nm or less. Alternatively, it is preferable that the carbon-containing layer be formed from carbon material particles having an average particle size of 10 nm or less.

The content of the carbon-containing layer is preferably 0.001 mass% to 3 mass% of the positive electrode active material. When the content of the carbon-containing layer is within this range, it is possible to decrease the positive electrode resistance and the interface resistance between the positive electrode and the nonaqueous electrolyte, and to improve the output performance.

The electroconductive agent improves the current collection performance of the positive electrode active material and suppresses the contact resistance between the positive electrode active material and the positive electrode current collector 31a.

Examples of the electroconductive agent include acetylene black, carbon black, artificial graphite, natural graphite, a conductive polymer and a carbon fiber. The electroconductive agent can be used singly or in combination of 2 types or more. It is preferable that the positive electrode 31 contain a carbon fiber having a fiber diameter of 1 µm or less as the electroconductive agent. When the positive electrode contains a carbon fiber having a fiber diameter of 1 µm or less, it is possible to improve the electron conduction resistance of the positive electrode 31 through the network of carbon fibers having a thin fiber diameter, and it is possible to effectively reduce the positive electrode resistance. It is particularly preferable that the carbon fiber having a fiber diameter of 1 µm or less be obtained by vapor phase growth. By using this carbon fiber, it is possible to improve the network of the electron conductivity inside the positive electrode 31, and thus, it is possible to significantly improve the output performance of the positive electrode 31.

The binder fills spaces among the dispersed positive electrode active materials to thereby bind the positive active material and the electroconductive agent, and bind the positive electrode active material and the positive electrode collector 31a.

Examples of the binder include a material containing polytetrafluoroethylene (PTFE), polyvinylidene fluoride (PVdF), or a fluorine-based rubber. As the binder, modified PVdF in which at least one group is substituted by another substituent group, a copolymer of vinylidene fluoride and propylene hexafluoride, and a terpolymer of polyvinylidene fluoride, tetrafluoroethylene and propylene hexafluoride can be used in association with the aforementioned materials.

The binder can be used singly or in combination of 2 types or more.

Also, as an organic solvent for dispersing the binder, for example, it is possible to use N-methyl-2-pyrrolidone (NMP), dimethylformamide (DMF) or the like.

Regarding the blending ratios of the positive electrode active material, the electroconductive agent and the binder in the positive electrode layer 31b, the positive electrode active material is preferably blended at 80 mass% or more and 95 mass% or less, the electroconductive agent is preferably blended at 3 mass% or more and 19 mass% or less, and the binder is preferably blended at 1 mass% or more and 7 mass% or less.

By setting the blending ratio of the electroconductive agent to 3 mass% or more, it is possible to improve the current collection performance of the positive electrode active material and to suppress the contact resistance between the positive electrode active material and the positive electrode current collector 31 a. Also, by setting the blending ratio of the electroconductive agent to 19 mass% or less, it is possible to reduce the decomposition of the nonaqueous electrolyte on the surface of the electroconductive agent in high temperature preservation.

By setting the blending ratio of the binder to 1 mass% or more, it is possible to obtain the sufficient electrode strength. Also, by setting the blending ratio of the binder to 7 mass% or less, it is possible to reduce the blending amount of the insulator of the electrode and to reduce the internal resistance.

The positive electrode current collector 31a is preferably, for example, an aluminum foil or an aluminum alloy foil containing an element such as Mg, Ti, Zn, Mn, Fe, Cu, or Si. Also, the thickness of an aluminum foil or an aluminum alloy foil is preferably 20 µm or less and more preferably 15 µm. A stainless foil or a titanium foil, etc. can also be used as the positive electrode collector 31a.

When the aforementioned aluminum foil is used as the positive electrode current collector 31a, the purity of the aluminum foil is preferably 99% or more.

Also, when the aforementioned aluminum alloy foil is used as the positive current electrode collector 31 a, it is preferable to suppress a content of a transition metal such as Fe or Cu to 1 mass% or less.

The positive electrode 31 can be produced as follows. For example, the positive electrode active material, the electroconductive agent and the binder are suspended in a general solvent to prepare a slurry. This slurry is applied to the positive electrode current collector 31 a, followed by drying. Then, the positive electrode current collector is subjected to pressing, to thereby produce the positive electrode. Alternatively, the positive electrode 31 can be produced as follows. The positive electrode active material, the electroconductive agent and the binder are molded in a pellet form to prepare the positive electrode layer 31b. This positive electrode layer is placed on the positive electrode current collector 31a, followed by molding, to thereby produce the positive electrode. The specific surface area based on the BET method of the positive electrode layer 31b is measured as in the same manner as for the negative electrode, and is preferably within the range of 0.1 m²/g to 2 m²/g.

### (2) Negative Electrode

The negative electrode 32 includes the negative electrode current collector 32a and the negative electrode layer 32b that is formed on one surface or both surfaces of the negative electrode current collector 32a and includes a negative electrode active material, an electroconductive agent and a binder. An electroconductive agent and a binder are optional components.

As a negative electrode active material, it is possible to use a titan-containing oxide.

In the negative electrode containing the titanium-containing oxide as a negative electrode active material, the lithium insertion and extraction potential with respect to the electrode potential of a lithium metal is preferably 2.5 V (vs. Li/Li⁺) to 1 V (vs. Li/Li⁺), and more preferably 2 V (vs. Li/Li⁺) to 1.3 V (vs. Li/Li⁺). When the lithium insertion and extraction potential is within the aforementioned range of the negative electrode potential, it is possible to obtain the assembly battery having a high capacity and good life performance. The negative electrode active material can be used singly or in combination of 2 types or more.

Examples of a titan-containing oxide include a titanium oxide, a lithium titanium oxide and a niobium titanium oxide.

The titanium oxide can be represented by the general formula LiₐTiO₂ (0≤a≤2). In this case, the composition formula before charge is TiO₂. Examples of the titanium oxide include a titanium oxide having a monoclinic structure (bronze structure (B)), a titanium oxide having a rutile structure and a titanium oxide having an anatase structure. TiO₂ (B) having a monoclinic structure (bronze structure (B)) is preferable, and it is preferable that this titanium oxide have a low crystallinity prepared by the thermal treatment at 300°C to 600°C.

Examples of a lithium titanium oxide include an oxide having a spinel structure (for example, the general formula Li_{4/3+a}Ti_{5/3}O₄ (0≤a≤2)), an oxide having a ramsdellite structure (for example, the general formula Li₂₊ₐTi₃O₇ (0≤a≤1)), Li_{1+b}Ti₂O₄ (0≤b≤1), Li_{1.1}+bTi_{1.8}O₄ (0≤b≤1), Li_{1.07+b}Ti_{1.86}O₄ (0≤b≤1), and a lithium-titanium-containing composite oxide having at least one element selected from the group consisting ofNb, Mo, W, P, V, Sn, Cu, Ni and Fe.

Examples of a niobium titanium oxide include an oxide represented by the general formula Li_{c}Nb_{d}TiO₇ (0≤c≤5, 1≤d≤4).

It is preferable that the titan-containing oxide contain at least one selected from the group consisting of a lithium titanium oxide having a ramsdellite structure, a lithium titanium oxide having a spinel structure, a titanium oxide having a monoclinic structure, and a niobium titanium oxide. Also, by blending at least one selected from the group consisting of a lithium titanium oxide having a ramsdellite structure, a titanium oxide having a monoclinic structure, and a niobium titanium oxide in the negative electrode, the voltage curve of the battery can have moderate tilt. For this reason, the state of charge (SOC) of the battery can be easily measured only by voltage monitoring. Also, the influence of the variation among the batteries is small in the battery pack, and it is possible to control only by voltage monitoring.

The average particle size of the primary particles of the negative electrode active material is preferably within a range of 0.001 µm to 1 µm. Also, it is possible to obtain the good performance even when the shape of the negative electrode active material is any of a particle shape and a fiber shape. When the shape is a fiber shape, the fiber diameter is preferably 0.1 µm or less.

In the negative electrode active material, the average particle size is preferably 1 µm or less, and the specific surface area based on the BET method using N₂ adsorption is preferably within the range of 3 m²/g to 200 m²/g. By setting these ranges, it is possible to further enhance the affinity of the negative electrode 32 for the nonaqueous electrolyte.

The porosity of the negative electrode 32 (except for the current collector) is preferably within a range of 20% to 50%, and more preferably a range of 25% to 40%. By setting these ranges, it is possible to obtain the negative electrode 32 which has a high density and is excellent in the affinity between the negative electrode 32 and the nonaqueous electrolyte.

The negative electrode current collector 32a is preferably an aluminum foil or an aluminum alloy foil.

The thickness of an aluminum foil or an aluminum alloy foil is preferably 20 µm or less, and more preferably 15 µm or less. The purity of an aluminum foil is preferably 99.99% or more. An aluminum alloy is preferably an alloy having an element such as magnesium, zinc or silicon. On the other hand, it is preferable to adjust the content of a transition metal such as iron, copper, nickel or chromium to 100 ppm or less.

The electroconductive agent improves the current collection performance of the negative electrode active material, and suppresses contact resistance between the negative electrode active material and the negative electrode current collector 32a.

As the electroconductive agent, for example, it is possible to use acetylene black, carbon black, coke (it is preferable that the thermal treatment temperature is 800°C to 2000°C and the average particle size is 10 µm or less), a carbon fiber, graphite, a metal compound powder such as TiO, TiC or TiN, or a metal powder such as Al, Ni, Cu, or Fe, etc. These materials can be used singly or in combination. By using carbon fiber having a fiber diameter of 1 µm or less, it is possible to reduce electrical resistance and to improve cycle life performance.

The binder fills spaces between the dispersed negative electrode active materials to thereby bind the negative active material and the electroconductive agent, and bind the negative electrode active material and the negative electrode collector 32a.

Examples of the binder include an agent containing polytetrafluoroethylene (PTFE), polyvinylidene fluoride (PVdF), a fluorine-based rubber, an acrylic rubber, a styrene-butadiene rubber, a core shell binder or polyimide. These binders can be used singly or in combination of 2 types or more.

Regarding the blending ratios of the negative electrode active material, the electroconductive agent, and the binder in the negative electrode layer 32b, the negative electrode active material is preferably blended at 80 mass% or more and 95 mass% or less, the electroconductive agent is preferably blended at 1 mass% or more and 18 mass% or less, and the binder is preferably blended at 2 mass% or more and 7 mass%.

By setting the blending ratio of the electroconductive agent to 1 mass% or more, it is possible to improve the current collection performance of the negative electrode layer 32b and the large current characteristics of the nonaqueous electrolyte secondary battery 1.

Also, by setting the blending ratio of the binder to 2 mass% or more, it is possible to improve the binding property between the negative electrode layer 32b and the negative electrode current collector 32a and the cycle characteristics.

On the other hand, it is preferable to set the blending ratio of the electroconductive agent to 18 mass% or less and to set the blending ratio of the binder to 7 mass% or less in terms of the achievement of high capacity.

The negative electrode 32 can be produced as follows. For example, the negative electrode active material, the electroconductive agent and the binder are suspended in a general solvent to prepare a slurry. This slurry is applied to the negative electrode current collector 32a, followed by drying. Then, the negative electrode current collector is subjected to pressing, to thereby produce the negative electrode. Alternatively, the negative electrode 32 can be produced as follows. The negative electrode active material, the electroconductive agent and the binder are molded in a pellet form to prepare the negative electrode layer 32b. This negative electrode layer 32b is placed on the negative electrode current collector 32a, followed by molding, to thereby produce the negative electrode.

### (3) Separator

The separator 33 is placed between the positive electrode 31 and the negative electrode 32.

As the separator 33, for example, it is possible to use an olefin-based porous film such as polyethylene (PE) and polypropylene (PP), or a separator made of cellulose fibers.

Examples of the form of the separator 33 include a non-woven fabric, film and paper, etc. The porosity of the separator 33 is preferably 50% or more and more preferably 62% or more and 80% or less. The separator made of cellulose fibers having a porosity of 60% or more is excellent in the impregnation property of the nonaqueous electrolyte, and can exhibit high output performance from a low temperature to a high temperature.

The diameter of the fiber constituting the separator 33 is preferably 10 µm or less, and more preferably 3 µm or less. By setting the diameter of the fiber constituting the separator 33 to 10 µm or less, it is possible to improve the affinity between the nonaqueous electrolyte and the separator 33 and to decrease the battery resistance.

The thickness of the separator 33 is preferably within a range of 5 µm to 50 µm. Also, the density of the separator 33 is preferably within a range of 0.2 g/cm³ to 0.9 g/cm³. When the thickness and the density of the separator 33 are within these ranges, it is possible to balance the mechanical strength and the reduction of the battery resistance, and it is possible to provide the high-output battery in which an internal short circuit hardly occurs. Moreover, thermal shrinkage under a high-temperature environment hardly occurs, and it is possible to exert good high-temperature storage performance. The thickness of the separator 33 is more preferably within a range of 10 µm to 30 µm.

Also, as the separator 33, it is possible to use the non-woven fabric or porous film which contains cellulose or polyolefin and has a thickness of 5 µm to 50 µm and a porosity of 50% or more.

### (4) Nonaqueous electrolyte

Examples of the nonaqueous electrolyte include a liquid, organic electrolyte prepared by dissolving an electrolyte in an organic solvent, a gel-like, organic electrolyte in which a liquid organic solvent and a polymer material are composited, and a solid, nonaqueous electrolyte in which a lithium salt electrolyte and a polymer material are composited. Also, an ambient temperature molten salt (ionic melt) containing a lithium ion can be used as the nonaqueous electrolyte. Examples of the polymer material include polyvinylidene fluoride (PVdF), polyacrylonitrile (PAN), and polyethylene oxide (PEO).

The nonaqueous electrolyte is preferably liquid or gel-like. Also, it is preferable that the nonaqueous electrolyte have a boiling point of 100°C or more and contain an organic electrolyte or an ambient temperature molten salt.

The liquid nonaqueous electrolyte is prepared by dissolving an electrolyte in an organic solvent at a concentration within a range of 0.5 mol/L to 2.5 mol/L. Because of this liquid nonaqueous electrolyte, it is possible to withdraw a high output even in a low-temperature environment. The concentration of the electrolyte in an organic electrolyte is more preferably within a range of 1.5 mol/L to 2.5 mol/L.

Examples of the electrolyte include LiBF₄, LiPF₆, LiAsF₆, LiClO₄, LiCF₃SO₃, LiN(CF₃SO₂)₂, LiN(C₂F₅SO₂)₂, Li(CF₃SO₂)₃C and LiB[(OCO)₂]₂. The electrolyte can be used singly or in combination of 2 types or more. Of these, it is preferable to contain lithium tetrafluoroborate (LiBF₄). Because of this electrolyte, the chemical stability of an organic solvent is enhanced, it is possible to decrease the film resistance on the negative electrode, and it is possible to significantly improve low-temperature performance and cycle life performance.

Examples of the organic solvent include cyclic carbonates such as propylene carbonate (PC) and ethylene carbonate (EC); linear carbonates such as diethyl carbonate (DEC), dimethyl carbonate (DMC) and methylethyl carbonate (MEC); linear ethers such as dimethoxyethane (DME) and diethoxyethane (DEE); cyclic ethers such as tetrahydrofuran (THF) and dioxolane (DOX); γ-butyrolactone (GBL); acetonitrile (AN); and sulfolane (SL). These organic solvents can be used singly or in a mixture form of 2 types or more. By blending at least one selected from the group of propylene carbonate (PC), ethylene carbonate (EC) and γ-butyrolactone (GBL), the boiling point of an organic solvent becomes 200°C or more, and therefore, it is possible to improve the thermal stability. In particular, the nonaqueous solvent containing γ-butyrolactone (GBL) can dissolve a high concentration of lithium salt, and therefore, can improve output performance under a low-temperature environment.

Also, it is preferable that an ambient temperature molten salt (ionic melt) be comprised of a lithium ion, an organic cation and an organic anion. Also, it is preferable that an ambient temperature molten salt be in a liquid state at a room temperature or lower.

Hereinafter, the electrolyte containing an ambient temperature molten salt is described.

An ambient temperature molten salt refers to a salt in which at least a part shows a liquid state at an ambient temperature. An ambient temperature refers to a temperature range at which a battery is assumed to normally operate. A temperature range at which a battery is assumed to normally operate is the following temperature range. The upper limit is about 120°C or about 60°C in some case, and the lower limit is about -40°C or about -20°C in some case. Of this temperature range, the temperature range of -20°C or more and 60°C or less is suitable.

It is preferable to use the ionic melt comprised of a lithium ion, an organic cation and an organic anion as a lithium ion-containing ambient temperature molten salt. Also, it is preferable that this ionic melt be in a liquid state even at a room temperature or lower.

Examples of the organic cation include the alkyl imidazolium ion and quaternary ammonium ion having the structure represented by the following formula (1).

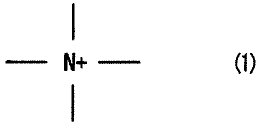

Preferable examples of the alkyl imidazolium ion include a dialkylimidazolium ion, a trialkyl imidazolium ion and a tetraalkyl imidazolium ion. As a dialkylimidazolium ion, 1-methyl-3-ethyl imidazolium ion (MEI⁺) is preferable. As a trialkyl imidazolium ion, 1,2-diethyl-3-propyl imidazolium ion (DMPI⁺) is preferable. As a tetraalkyl imidazolium ion, 1,2-diethyl-3,4(5)-dimethyl imidazolium ion is preferable.

Preferable examples of the quaternary ammonium ion include a tetraalkylammonium ion and a cyclic ammonium ion. Preferable examples of a tetraalkylammonium ion include a dimethylethyl(methoxyethyl)ammonium ion, a dimethylethyl(methoxymethyl)ammonium ion, a dimethylethyl(ethoxyethyl)ammonium ion and a trimethylpropylammonium ion.

By using the alkyl imidazolium ion or the quaternary ammonium ion (especially a tetraalkylammonium ion), it is possible to adjust the melting point of the ambient temperature molten salt to 100°C or less, and more preferably to 20°C or less. Moreover, it is possible to decrease the reactivity of the ambient temperature molten salt and the negative electrode 32.

The concentration of a lithium ion is preferably 20 mol% or more, and more preferably 1 mol% to 10 mol%. By adjusting the concentration of a lithium ion, it is possible to easily form a liquid, ambient temperature molten salt even at a low temperature of 20°C or less. Also, it is possible to decrease the viscosity of an ambient temperature molten salt even at an ambient temperature or less, and it is possible to increase the ionic conductivity.

It is preferable that at least one of BF₄⁻, PF₆⁻, AsF₆⁻, ClO₄⁻, CF₃SO₃⁻, CF₃COO⁻, CH₃COO⁻, CO₃²⁻, (FSO₂)₂N⁻, N(CF₃SO₂)₂⁻, N(C₂F₅SO₂)₂⁻ and (CF₃SO₂)₃C⁻ coexist as an anion. By making plural anions coexist, it is possible to easily form the ambient temperature molten salt having a melting point of 20°C or less. More preferable examples of an anion include BF₄⁻, (FSO₂)₂N⁻, CF₃SO₃⁻, CF₃COO⁻, CH₃COO⁻, CO₃²⁻, N(CF₃SO₂)₂⁻, N(C₂F₅SO₂)₂⁻ and (CF₃SO₂)₃C⁻. By using these anions, it is more easily to form the ambient temperature molten salt having a melting point of 0°C or less.

### (5) Exterior Material

As the exterior material 7, a laminate film is used.

As the shape of the region which houses the respective electrode groups of exterior material 7, it is possible to appropriately select a flat type (thin type) and a square type, etc.

Examples of this type of exterior container 7 include, depending on a battery size, an exterior material for a small battery mounted on a portable electronic device, etc. and an exterior material for a large battery mounted on a two-wheel or four-wheel motor vehicle, etc.

When using the exterior material 7 formed of a laminate film, it is possible to use a multi-layer film in which the metal layer is placed between the resin layers.

As the material constituting the metal layer, for example, it is possible to use a stainless steel foil, an aluminum foil, and an aluminum alloy foil, etc. Of these, in terms of weight reduction, it is preferable to use an aluminum foil or an aluminum alloy foil. By using an aluminum foil or an aluminum alloy foil, it is possible to reduce the weight of a battery.

The resin layer reinforces the metal layer. As the material constituting the resin layer, for example, it is possible to use a polymer material such as polypropylene (PP), polyethylene (PE), nylon or polyethylene terephthalate (PET).

The thickness of a laminate film constituting the exterior material 7 is preferably 0.5 mm or less, and more preferably 0.2 mm or less. A laminate film can be molded into a desired shape by carrying out heat-sealing.

Also, the exterior material 7 can be formed from a thin plate of a metal such as aluminum, an aluminum alloy, iron, nickel-plated iron and stainless steel.

The thickness of a thin plate is preferably 0.5 mm or less, and more preferably 0.3 mm or less.

### (6) Electrode Lead

As the positive electrode lead 4 connected electrically to the positive electrode 31, for example, it is possible to use a lead formed of aluminum, titanium, the alloy based on aluminum and/or titanium, or stainless steel, etc.

As the negative electrode lead 5 connected electrically to the negative electrode 32, for example, it is possible to use a lead formed of nickel, copper or the alloys based on nickel and/or copper, etc.

As the connection lead 6 connected electrically to the positive electrode 31 and the negative electrode 32, for example, it is possible to use a lead formed from aluminum, titanium or an aluminum alloy.

When a negative electrode potential is nobler than 1 V with respect to metal lithium, for example when a lithium titanium oxide is used as the negative electrode active material, it is possible to use aluminum or an aluminum alloy as the material of the negative electrode lead 5. In this case, it is preferable to use aluminum or an aluminum alloy for both of the positive electrode lead 4 and the negative electrode lead 5 in term of weight reduction and electrical resistance suppression to a small value.

In terms of mechanical characteristics, it is preferable that the positive electrode lead 4 and the negative electrode lead 5 do not have the much greater mechanical strength than the positive electrode current collector 31a or the negative electrode current collector 32a because it is possible to relax the stress concentration at the connected parts thereof. Ultrasonic welding is one of the preferable methods as the connection method between the positive electrode lead 4 or the negative electrode lead 5, and each of the current collectors. When using ultrasonic welding, it is preferable that Young's modulus of the positive electrode lead 4 or the negative electrode lead 5 be small because strong welding is easily carried out.

For example, pure aluminum (JIS1000 series) subjected to an annealing process is preferable as the material of the positive electrode lead 4 or the negative electrode lead 5.

The thickness of the positive electrode lead 4 is preferably within a range of 0.1 mm to 1 mm and more preferably a range of 0.2 mm to 0.5 mm.

The thickness of the negative electrode lead 5 is preferably within a range of 0.1 mm to 1 mm and more preferably a range of 0.2 mm to 0.5 mm.

### (7) Thermoplastic Resin Layer

The thermoplastic resin layers 10, 11, 12 can be formed from 1 type of resin or 2 types or more of resins.

The melting point of the thermoplastic resin used to form the thermoplastic resin layers 10, 11, 12 is preferably 120°C or more, and more preferably within a range of 140°C to 250°C.

Examples of the thermoplastic resin include polyethylene (PE) and polypropylene (PP). In particular, the polypropylene having a melting point of 150°C or more is preferable because it is possible to improve the sealing strength of the heat-sealing part (sealing part 9).

In the nonaqueous electrolyte secondary battery 1 of the 1st embodiment, the 1st electrode group 2 and the 2nd electrode group 3, which include the positive electrode 31 containing an iron-containing phosphorus compound which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2) and the negative electrode 32 containing the titan-containing oxide, are electrically connected in series. Also, the nonaqueous electrolyte secondary battery has an average discharge voltage of about 3.6 V at a charge maximum voltage within a range of 4 V or more and 5 V or less. For these reasons, the nonaqueous electrolyte secondary battery can have voltage compatibility with a conventional lithium ion battery. Accordingly, it is possible to interchange the protective circuit for overcurrent protection, overcharge prevention and overdischarge prevention which is used for a conventional lithium ion battery.

Also, in the nonaqueous electrolyte secondary battery 1 of the 1st embodiment, for example, the exterior material 7 can be folded along the center line c1, which passes through the connection part 8C of the common sealing part, so as to stack the 1st housing part 8A (1st region 7A) and the 2nd housing part 8B (2nd region 7B).

Hereinafter, the folding form of the nonaqueous electrolyte secondary battery 1 is described with reference to FIG. 1A, FIG. 1B, FIG. 2, FIG. 5A, FIG. 5B, FIG. 6A, FIG. 6B, FIG. 7A, FIG. 7B, FIG. 8 and FIG. 9.

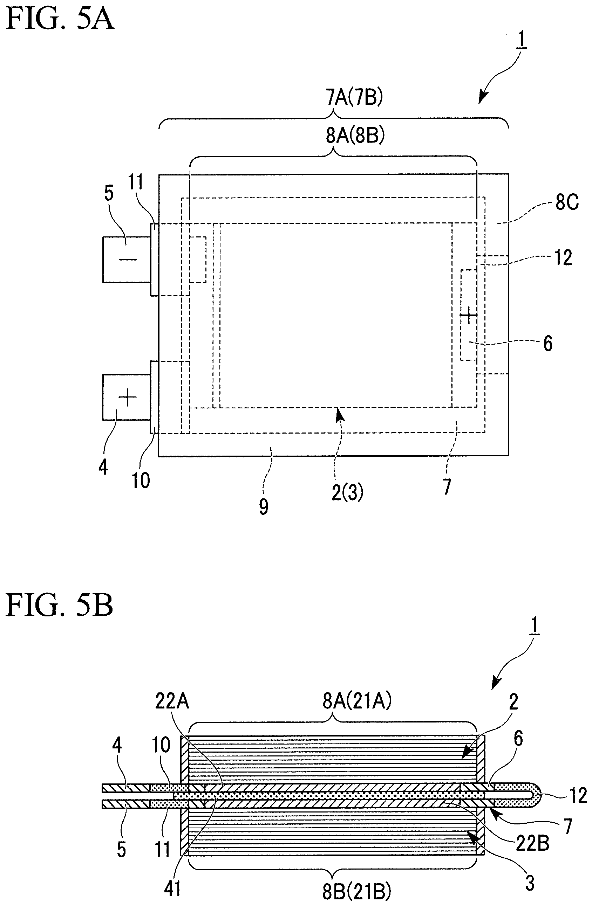

In the 1 st example of the folding form of the nonaqueous electrolyte secondary battery 1 shown in FIG. 5A and FIG. 5B, the 1 st region 7A (1 st housing part 8A) and the 2nd region 7B (2nd housing part 8B) are stacked such that the cap part 22A covering the opening part of the housing part 21A formed of the concave part, which houses the 1st electrode group 2 and is formed in the exterior material 7, and the cap part 22B covering the opening part of the housing part 21B formed of the concave part, which houses the 2nd electrode group 3 and is formed in the exterior material, face each other. In the present embodiment, the first region and the second region are stacked through the adhesive fixing layer 41. The 1st region 7A and the 2nd region 7B are adhesively fixed by the adhesive fixing layer 41.

As the adhesive material constituting the adhesive fixing layer 41, a double-sided tape can be exemplified.

Also, as shown in FIG. 3, the positive electrode current collector tab 34 and the negative electrode current collector tab 35 are arranged so as not to exist on the same straight line with each other. Thus, when stacking the 1 st region 7A and the 2nd region 7B, as shown in FIG. 5A, the positive electrode lead 4 connected to the positive electrode current collector tab 34 and the negative electrode lead 5 connected to the negative electrode current collector tab 35 can be alternately arranged so as not to overlap with each other.

In this manner, in the 1 st example, the 1 st region 7A and the 2nd region 7B are stacked so as to fold the nonaqueous electrolyte secondary battery 1. Thus, it is possible to reduce the size of the nonaqueous electrolyte secondary battery 1, and the degree of spatial freedom is improved when the nonaqueous electrolyte secondary battery 1 is mounted in a motor vehicle, etc.

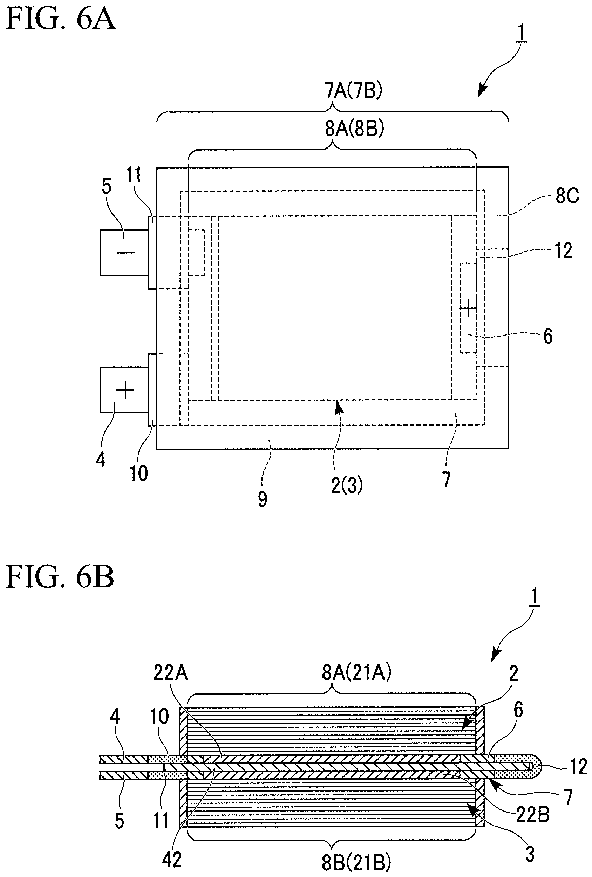

In the 2nd example of the folding form of the nonaqueous electrolyte secondary battery 1 shown in FIG. 6A and FIG. 6B, the 1st region 7A (1st housing part 8A) and the 2nd region 7B (2nd housing part 8B) are stacked through the heat-releasing member 42 such that the cap part 22A covering the opening part of the housing part 21A formed of the concave part, which houses the 1 st electrode group 2, and the cap part 22B covering the opening part of the housing part 21B formed of the concave part, which houses the 2nd electrode group 3, face each other. Also, unillustrated adhesive fixing layer is provided between the 1st region 7A and the heat-releasing member 42 and between the 2nd region 7B and the heat-releasing member 42. The 1st region 7A and the heat-releasing member 42 are adhesively fixed by the adhesive fixing layer, and the 2nd region 7B and the heat-releasing member 42 are adhesively fixed by the adhesive fixing layer.

The heat-releasing member 42 is provided in a state of being interposed between the 1st region 7A and the 2nd region 7B, for example, such that the heat-releasing member protrudes on both sides of the side surfaces of the 1st region 7A and the 2nd region 7B (on both sides of the direction perpendicular to the paper in FIG. 6B). The heat generated during the charge and discharge of the nonaqueous electrolyte secondary battery 1 is conducted to the heat-releasing member 42 and is released from the protrusion parts described above.

As the heat-releasing member 42, for example, it is possible to use a material having a good thermal conductivity such as a metal plate formed from copper, aluminum, an aluminum alloy, iron or stainless steel, etc.

As the adhesive material constituting the adhesive fixing layer, a double-sided tape can be exemplified.

Also, as shown in FIG. 6B, when stacking the 1st region 7A and the 2nd region 7B, the positive electrode lead 4 connected to the positive electrode current collector tab 34 and the negative electrode lead 5 connected to the negative electrode current collector tab 35 can be alternately arranged so as not to overlap with each other.

In this manner, in the 2nd example, the 1 st region 7A and the 2nd region 7B are stacked so as to fold the nonaqueous electrolyte secondary battery 1. Thus, it is possible to reduce the size of the nonaqueous electrolyte secondary battery 1, and the degree of spatial freedom is improved when the nonaqueous electrolyte secondary battery 1 is mounted in a motor vehicle, etc. Also, the heat-releasing member 42 is interposed between the 1 st region 7A and the 2nd region 7B, and thus, it is possible to efficiently release the heat generated during the charge and discharge of the nonaqueous electrolyte secondary battery 1.

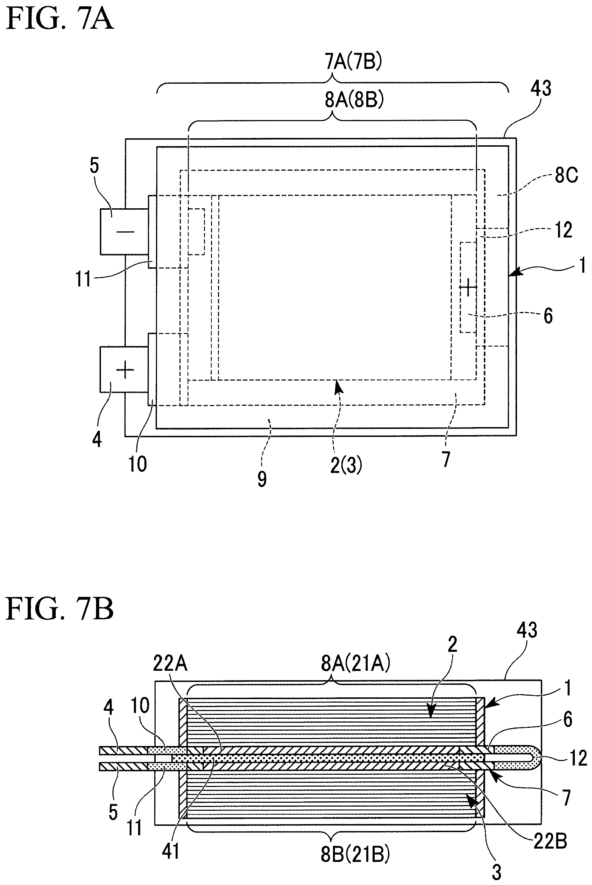

In the 3rd example of the folding form of the nonaqueous electrolyte secondary battery 1 shown in FIG. 7A and FIG. 7B, the nonaqueous electrolyte secondary battery 1 is housed in the metal container (exterior can) 43 in a folded form.

As the container 43, for example, it is possible to use a container formed from aluminum, an aluminum alloy, iron, nickel-plated iron or stainless steel, etc.

Also, as shown in FIG. 7A, when stacking the 1st region 7A and the 2nd region 7B the positive electrode lead 4 connected to the positive electrode current collector tab 34 and the negative electrode lead 5 connected to the negative electrode current collector tab 35 can be alternately arranged so as not to overlap with each other.

In this manner, in the 3rd example, the 1st region 7A and the 2nd region 7B are stacked, and the nonaqueous electrolyte secondary battery 1 is housed in the metal container 43 in a folded form. Thus, it is possible to reduce the size of the nonaqueous electrolyte secondary battery 1, and the degree of spatial freedom is improved when the nonaqueous electrolyte secondary battery 1 is mounted in a motor vehicle, etc. Also, it is possible to prevent the nonaqueous electrolyte secondary battery 1 from being damaged by an external impact, etc.

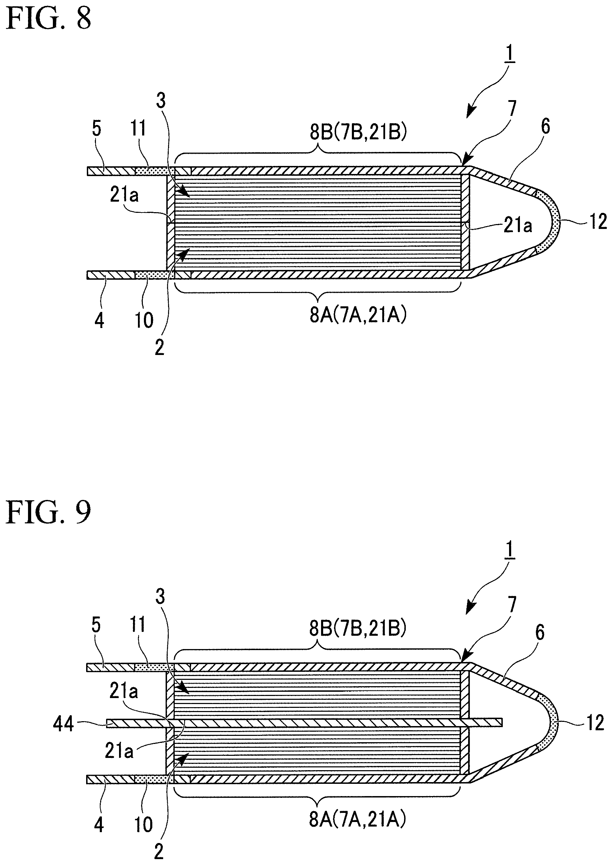

In the 4th example of the folding form of the nonaqueous electrolyte secondary battery 1 shown in FIG. 8, the 1st region 7A (1st housing part 8A) and the 2nd region 7B (2nd housing part 8B) are stacked such that the bottom surface 21 a of the housing part 21A formed of the concave part, which houses the 1st electrode group 2 and is formed in the exterior material 7, and the bottom surface 21a of the housing part 21B formed of the concave part, which houses the 2nd electrode group 3 and is formed in the exterior material, face each other. In this case, it is preferable that the first region and the second region be stacked through an unillustrated adhesive fixing layer. The 1 st region 7A and the 2nd region 7B are adhesively fixed by the adhesive fixing layer.

As the adhesive material constituting the adhesive fixing layer, a double-sided tape can be exemplified.

Also, when stacking the 1st region 7A and the 2nd region 7B, the positive electrode lead 4 connected to the positive electrode current collector tab 34 and the negative electrode lead 5 connected to the negative electrode current collector tab 35 can be alternately arranged so as not to overlap with each other.

In this manner, in the 4th example, the 1st region 7A and the 2nd region 7B are stacked such that the bottom surface 21 a of the housing part 21 A and the bottom surface 21a of the housing part 21B face each other, and the nonaqueous electrolyte secondary battery 1 is folded. Thus, it is possible to increase the bending radius of the folded part of the exterior material 7 (the part in which the connecting lead 6 exists), and it is possible to decrease the deformation amount of the folded part. For these reasons, it is possible to suppress the breakage of the exterior material 7 and the leakage of nonaqueous electrolyte.

In the 5th example of the folding form of the nonaqueous electrolyte secondary battery 1 shown in FIG. 9, the 1st region 7A (1st housing part 8A) and the 2nd region 7B (2nd housing part 8B) are stacked through the heat-releasing member 44 such that the bottom surface 21 a of the housing part 21A formed of the concave part, which houses the 1st electrode group 2 and is formed in the exterior material 7, and the bottom surface 21 a of the housing part 21B formed of the concave part, which houses the 2nd electrode group 3 and is formed in the exterior material, face each other. Also, unillustrated adhesive fixing layer is provided between the 1st region 7A and the heat-releasing member 44 and between the 2nd region 7B and the heat-releasing member 44. The 1st region 7A and the heat-releasing member 44 are adhesively fixed by the adhesive fixing layer, and the 2nd region 7B and the heat-releasing member 44 are adhesively fixed by the adhesive fixing layer.

The heat-releasing member 44 is provided in a state of being interposed between the 1st region 7A and the 2nd region 7B, for example, such that the heat-releasing member protrudes on both sides of the length direction of the 1 st region 7A and the 2nd region 7B (on both sides of the horizontal direction of the paper in FIG. 9). The heat generated during the charge and discharge of the nonaqueous electrolyte secondary battery 1 is conducted to the heat-releasing member 44 and is released from the protrusion parts described above.

As the heat-releasing member 44, for example, it is possible to use a material having a good thermal conductivity such as a metal plate formed from copper, aluminum, an aluminum alloy, iron or stainless steel, etc.

As the adhesive material constituting the adhesive fixing layer, a double-sided tape can be exemplified.

Also, the positive electrode lead 4 connected to the positive electrode current collector tab 34 and the negative electrode lead 5 connected to the negative electrode current collector tab 35 can be alternately arranged so as not to overlap with each other.

In this manner, in the 5th example, the 1 st region 7A and the 2nd region 7B are stacked such that the bottom surface 21 a of the housing part 21 A and the bottom surface 21a of the housing part 21B face each other, and the nonaqueous electrolyte secondary battery 1 is folded. Thus, it is possible to increase the bending radius of the folded part of the exterior material 7 (the part in which the connecting lead 6 exists), and it is possible to decrease the deformation amount of the folded part. For these reasons, it is possible to suppress the breakage of the exterior material 7 and the leakage of nonaqueous electrolyte. Also, the heat-releasing member 44 is interposed between the 1st region 7A and the 2nd region 7B, and thus, it is possible to efficiently release the heat generated during the charge and discharge of the nonaqueous electrolyte secondary battery 1.

### (Second Embodiment)

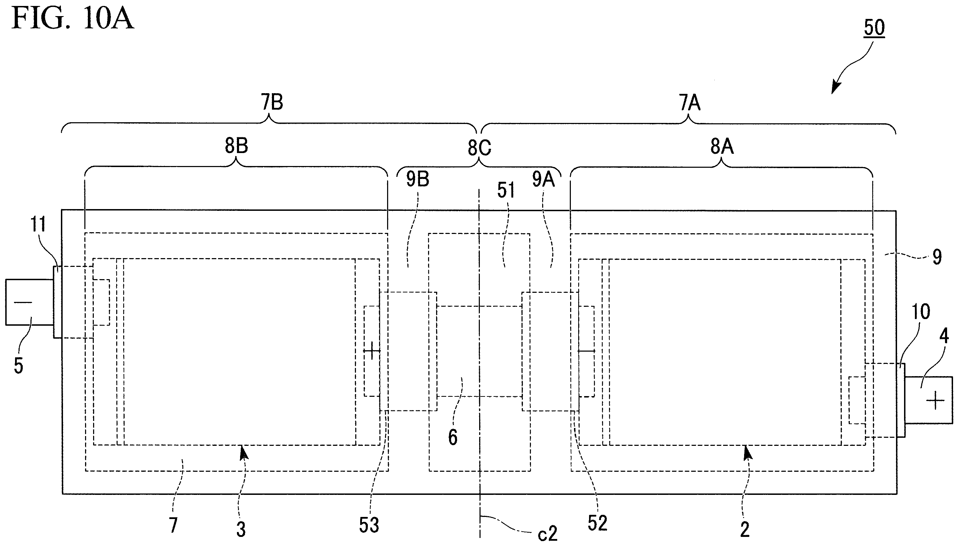

Hereinafter, the 2nd embodiment is described with reference to FIG. 10A, FIG. 10B, FIG. 11A, FIG. 11B, FIG. 12A and FIG. 12B.

In the following description, the same reference signs are assigned to the features which are the same as the features described in the 1 st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, and the detailed descriptions thereof are omitted. Also, the features, which are not illustrated in FIG. 10A, FIG. 10B, FIG. 11A, FIG. 11B, FIG. 12A and FIG. 12B, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, etc.

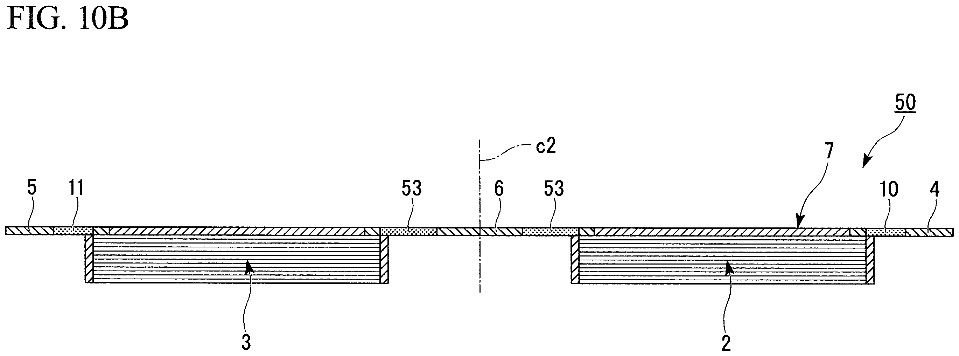

As shown in FIG. 10A and FIG. 10B, the nonaqueous electrolyte secondary battery 50 of the 2nd embodiment includes the 1st electrode group 2, the 2nd electrode group 3, the positive electrode lead 4 connected to the positive electrode of the 1st electrode group 2; the negative electrode lead 5 connected to the negative electrode of the 2nd electrode group 3; and the connection lead 6 connecting the 1st electrode group 2 and the 2nd electrode group 3 in series, and the exterior material 7 housing the 1st electrode group 2, the 2nd electrode group 3, the positive electrode lead 4, the negative electrode lead 5 and the connection lead 6.

The shape of the nonaqueous electrolyte secondary battery 50 is not limited to a rectangular shape, and can be various shapes such as a flat shape (a thin shape).

In the nonaqueous electrolyte secondary battery 50 of the 2nd embodiment, the connection part 8C is provided with the 1 st sealing part 9A which seals the 1 st housing part 8A, the 2nd sealing part 9B which seals the 2nd housing part 8B, and an unsealed part 51 provided between the 1st sealing part 9A and the 2nd sealing part 9B. The part of the connection lead 6, which exists in the unsealed part 51, is not adhesively fixed to the exterior material 7.

Also, it is preferable that at least the part of the surface of the connection lead 6, which passes through the 1 st sealing part 9A and the 2nd sealing part 9B, be coated with the thermoplastic resin layers 52, 53. When preparing this structure, the thermoplastic resin layers 52, 53 adhere to the connection lead 6 through thermal bonding, and the thermoplastic resin layers 52, 53 adhere to the exterior material 7 through thermal bonding. Thus, it is possible to prevent the electrolyte housed in the exterior material 7 from permeating and leaking. Also, the exterior material 7 and the connection lead 6 are insulated by the thermoplastic resin layers 52, 53, and thus, it is possible to prevent a short circuit due to the contact between the connection lead 6 and the exterior material 7.

The thermoplastic resin layers 52, 53 can be formed from the same resin as the thermoplastic resin layers 10, 11.

In the nonaqueous electrolyte secondary battery 50 of the 2nd embodiment, the 1st electrode group 2 and the 2nd electrode group 3, which include the positive electrode 31 containing an iron-containing phosphorus compound which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2) and the negative electrode 32 containing the titan-containing oxide, are electrically connected in series. Also, the nonaqueous electrolyte secondary battery has an average discharge voltage of about 3.6 V at a charge maximum voltage within a range of 4 V or more and 5 V or less. For these reasons, the nonaqueous electrolyte secondary battery can have voltage compatibility with a conventional lithium ion battery. Accordingly, it is possible to interchange the protective circuit for overcurrent protection, overcharge prevention and overdischarge prevention which is used for a conventional lithium ion battery.

Also, in the nonaqueous electrolyte secondary battery 50 of the 2nd embodiment, for example, the exterior material 7 can be folded along the center line c2, which passes through the unsealed part 51 provided between the 1st sealing part 9A and the 2nd sealing part 9B, so as to stack the 1st housing part 8A (1st region 7A) and the 2nd housing part 8B (2nd region 7B).

Hereinafter, the folding form of the nonaqueous electrolyte secondary battery 50 is described with reference to FIG. 10A, FIG. 10B, FIG. 11A, FIG. 11B, FIG. 12A and FIG. 12B.

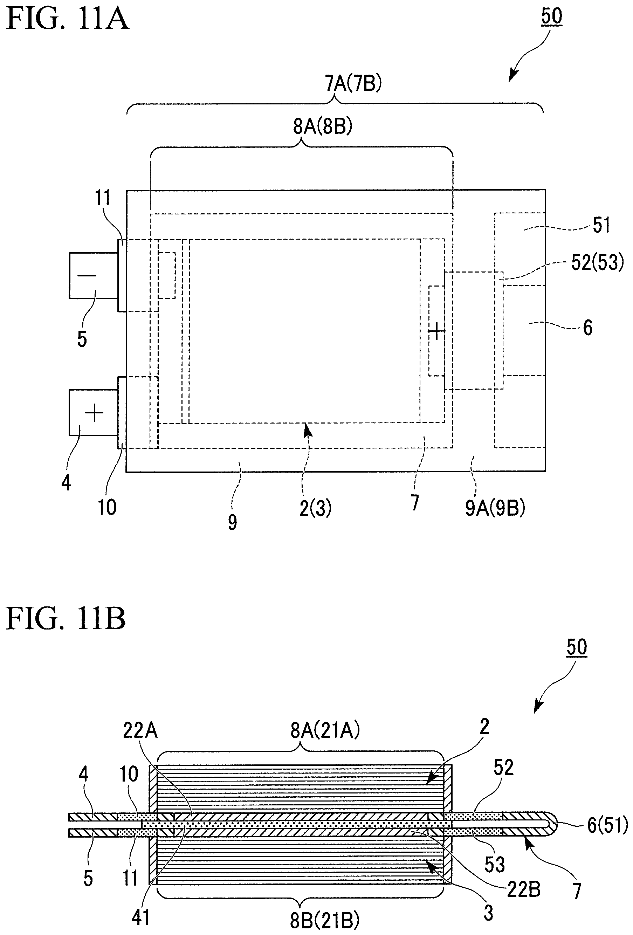

In the 1st example of the folding form of the nonaqueous electrolyte secondary battery 50 shown in FIG. 11A and FIG. 11B, the 1 st region 7A (1st housing part 8A) and the 2nd region 7B (2nd housing part 8B) are stacked through the adhesive fixing layer 41 such that the cap part 22A covering the opening part of the housing part 21 A formed of the concave part, which houses the 1st electrode group 2 and is formed in the exterior material 7, and the cap part 22B covering the opening part of the housing part 21B formed of the concave part, which houses the 2nd electrode group 3 and is formed in the exterior material, face each other. The 1st region 7A and the 2nd region 7B are adhesively fixed by the adhesive fixing layer 41.

Also, when stacking the 1st region 7A and the 2nd region 7B, as shown in FIG. 11A, the positive electrode lead 4 connected to the positive electrode current collector tab 34 and the negative electrode lead 5 connected to the negative electrode current collector tab 35 are alternately arranged so as not to overlap with each other.

In this manner, in the 1st example, the 1st region 7A and the 2nd region 7B are stacked so as to fold the nonaqueous electrolyte secondary battery 50. Thus, it is possible to reduce the size of the nonaqueous electrolyte secondary battery 50, and the degree of spatial freedom is improved when the nonaqueous electrolyte secondary battery 50 is mounted in a motor vehicle, etc. Also, the exterior material 7 is folded at the unsealed part 51 provided between the 1st sealing part 9A and the 2nd sealing part 9B, and thus, the stress hardly occurs in the exterior material located outside when folding the exterior material 7. Also, it is possible to suppress the breakage of the exterior material 7 and the leakage of nonaqueous electrolyte.

Herein, this example describes the case in which the 1st region 7A and the 2nd region 7B are stacked through the adhesive fixing layer 41, but the present embodiment is not limited thereto. In the present embodiment, the 1 st region 7A and the 2nd region 7B can be stacked through the heat-releasing member in the same manner in the 1st embodiment.

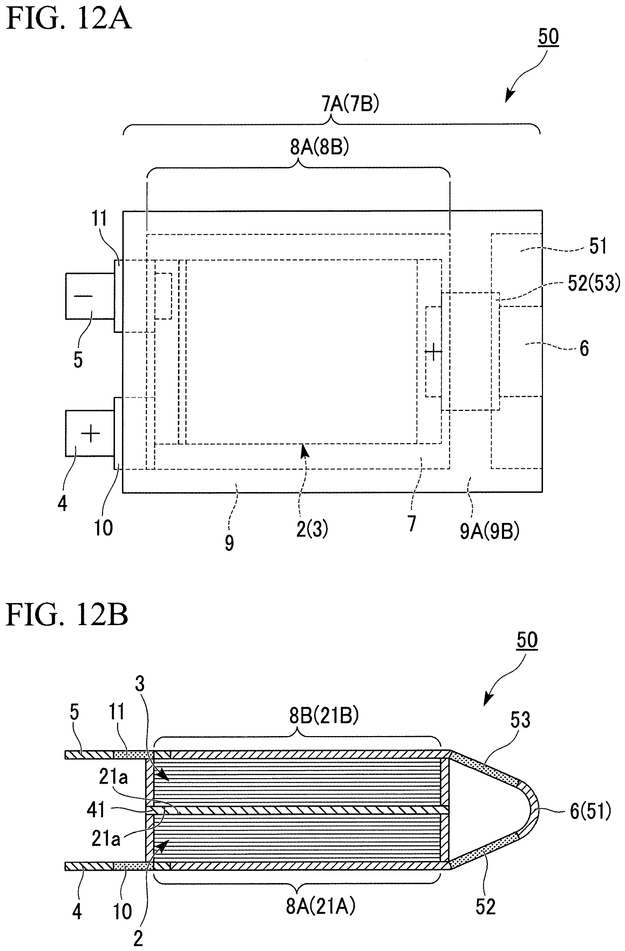

In the 2nd example of the folding form of the nonaqueous electrolyte secondary battery 50 shown in FIG. 12A and FIG. 12B, the 1st region 7A (1st housing part 8A) and the 2nd region 7B (2nd housing part 8B) are stacked such that the bottom surface 21 a of the housing part 21 A formed of the concave part, which houses the 1st electrode group 2 and is formed in the exterior material 7, and the bottom surface 21a of the housing part 21 B formed of the concave part, which houses the 2nd electrode group 3 and is formed in the exterior material, face each other. In the present embodiment, the first region and the second region be stacked through the adhesive fixing layer 41. The 1st region 7A and the 2nd region 7B are adhesively fixed by the adhesive fixing layer 41.

Also, when stacking the 1st region 7A and the 2nd region 7B, as shown in FIG. 12A, the positive electrode lead 4 connected to the positive electrode current collector tab 34 and the negative electrode lead 5 connected to the negative electrode current collector tab 35 are alternately arranged so as not to overlap with each other.

In this manner, in the 2nd example, the 1 st region 7A and the 2nd region 7B are stacked such that the bottom surface 21a of the housing part 21 A and the bottom surface 21a of the housing part 21B face each other, and the nonaqueous electrolyte secondary battery 50 is folded. Thus, it is possible to increase the bending radius of the folded part of the exterior material 7 (the part in which the connecting lead 6 exists), and it is possible to decrease the deformation amount of the folded part. For these reasons, it is possible to suppress the breakage of the exterior material 7 and the leakage of nonaqueous electrolyte. Also, the exterior material 7 is folded at the unsealed part 51 provided between the 1 st sealing part 9A and the 2nd sealing part 9B, and thus, the stress hardly occurs in the exterior material located outside when folding the exterior material 7. Also, it is possible to further enhance the effect of suppressing the breakage of the exterior material 7 and the leakage of nonaqueous electrolyte.

Herein, this example describes the case in which the 1 st region 7A and the 2nd region 7B are stacked through the adhesive fixing layer 41, but the present embodiment is not limited thereto. In the present embodiment, the 1 st region 7A and the 2nd region 7B can be stacked through the heat-releasing member in the same manner in the 1 st embodiment.

### (Third Embodiment)

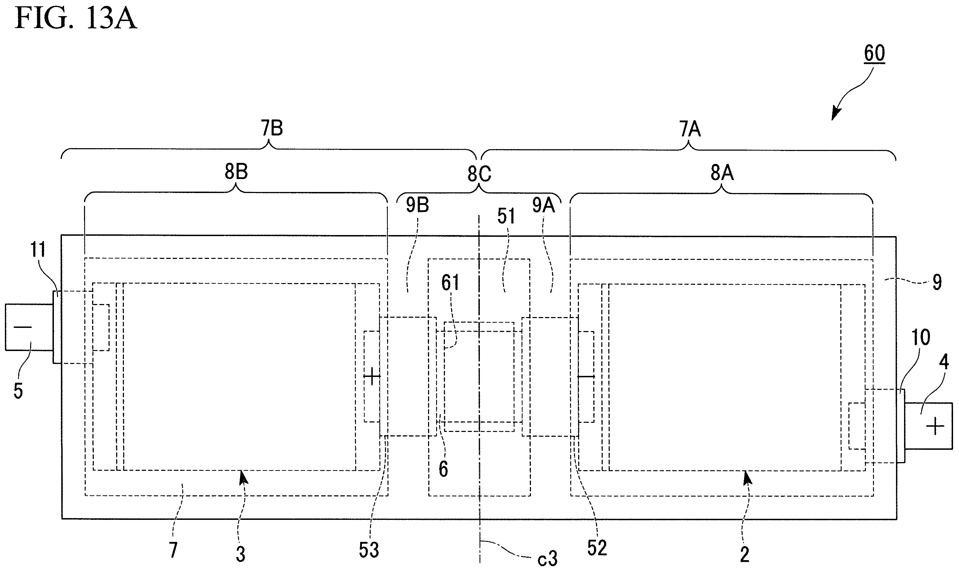

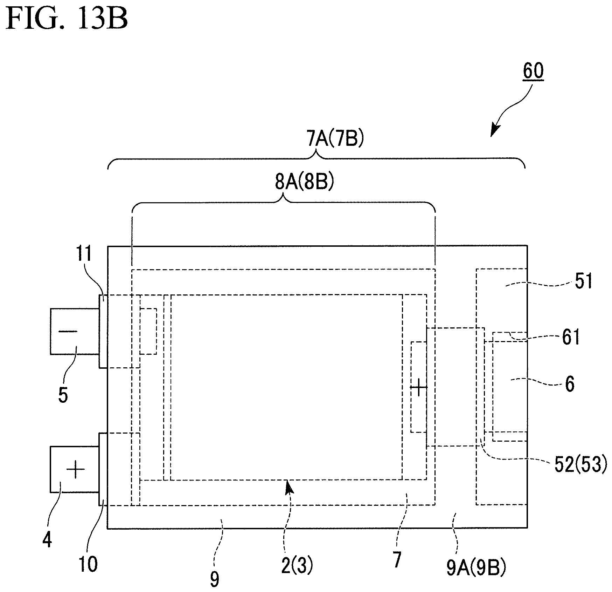

Hereinafter, the 3rd embodiment is described with reference to FIG. 13A and FIG. 13B.

In the following description, the same reference signs are assigned to the features which correspond to the features described in the 1st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9 and the features described in the 2nd embodiment with reference to FIG. 10A, FIG. 10B, FIG. 11A, FIG. 11B, FIG. 12A and FIG. 12B, and the detailed descriptions thereof are omitted. Also, the features, which are not illustrated in FIG. 13A and FIG. 13B, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8, FIG. 9, FIG. 10A, FIG. 10B, FIG. 11A, FIG. 11B, FIG. 12A and FIG. 12B.

As shown in FIG. 13A and FIG. 13B, the nonaqueous electrolyte secondary battery 60 of the 3rd embodiment includes the 1 st electrode group 2, the 2nd electrode group 3, the positive electrode lead 4 connected to the positive electrode of the 1st electrode group 2; the negative electrode lead 5 connected to the negative electrode of the 2nd electrode group 3; and the connection lead 6 connecting the 1st electrode group 2 and the 2nd electrode group 3 in series, and the exterior material 7 housing the 1st electrode group 2, the 2nd electrode group 3, the positive electrode lead 4, the negative electrode lead 5 and the connection lead 6.

The shape of the nonaqueous electrolyte secondary battery 60 is not limited to a rectangular shape, and can be various shapes such as a flat shape (a thin shape).

In the nonaqueous electrolyte secondary battery 60 of the 3rd embodiment, the connection part 8C is provided with the 1st sealing part 9A which seals the 1st housing part 8A, the 2nd sealing part 9B which seals the 2nd housing part 8B, and an unsealed part 51 provided between the 1st sealing part 9A and the 2nd sealing part 9B. The part of the connection lead 6, which exists in the unsealed part 51, is not adhesively fixed to the exterior material 7.

Also, the opening part 61 exposing the connection lead 6 is provided at the unsealed part 51. The size of the opening part 61 is not particularly limited, but the size enough to expose the most part of the connection lead 6 is preferable in order to efficiently release the heat generated during the charge and discharge of the nonaqueous electrolyte secondary battery 60 from the connection lead 6.

In the nonaqueous electrolyte secondary battery 60 of the 3rd embodiment, the 1st electrode group 2 and the 2nd electrode group 3, which include the positive electrode 31 containing an iron-containing phosphorus compound which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2) and the negative electrode 32 containing the titan-containing oxide, are electrically connected in series. Also, the nonaqueous electrolyte secondary battery has a charge maximum voltage within a range of 4 V or more and 5 V or less. For these reasons, the nonaqueous electrolyte secondary battery has excellent performance.

Also, in the nonaqueous electrolyte secondary battery 60 of the 3rd embodiment, for example, the exterior material 7 can be folded along the center line c3, which passes through the unsealed part 51 provided between the 1st sealing part 9A and the 2nd sealing part 9B, so as to stack the 1 st housing part 8A (1st region 7A) and the 2nd housing part 8B (2nd region 7B).

The nonaqueous electrolyte secondary battery 60 can be folded in the same manner as the nonaqueous electrolyte secondary battery 50 of the 2nd embodiment.

When stacking the 1st region 7A and the 2nd region 7B, as shown in FIG. 13A, the positive electrode lead 4 connected to the positive electrode current collector tab 34 and the negative electrode lead 5 connected to the negative electrode current collector tab 35 are alternately arranged so as not to overlap with each other.

In the 3rd embodiment, the 1st region 7A and the 2nd region 7B are stacked so as to fold the nonaqueous electrolyte secondary battery 60. Thus, it is possible to reduce the size of the nonaqueous electrolyte secondary battery 60, and the degree of spatial freedom is improved when the nonaqueous electrolyte secondary battery 60 is mounted in a motor vehicle, etc. Also, the exterior material 7 is folded at the unsealed part 51 provided between the 1 st sealing part 9A and the 2nd sealing part 9B, and thus, the stress hardly occurs in the exterior material located outside when folding the exterior material 7. Also, it is possible to suppress the breakage of the exterior material 7 and the leakage of nonaqueous electrolyte. Moreover, by providing the opening part 61 exposing the connection lead 6 at the unsealed part 51, it is possible to efficiently release the heat generated during the charge and discharge of the nonaqueous electrolyte secondary battery 60 from the connection lead 6.

### (Fourth Embodiment)

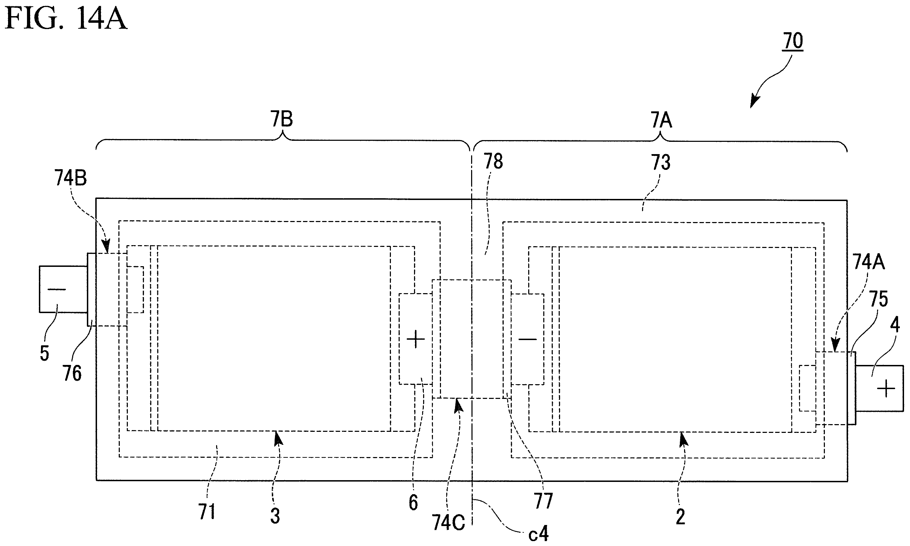

Hereinafter, the 4th embodiment is described with reference to FIG. 14A, FIG. 14B, FIG. 15A, FIG. 15B, FIG. 15C and FIG. 16.

In the following description, the same reference signs are assigned to the features which correspond to the features described in the 1 st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, and the detailed descriptions thereof are omitted. Also, the features, which are not illustrated in FIG. 14A, FIG. 14B, FIG. 15A, FIG. 15B, FIG. 15C and FIG. 16, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, etc.

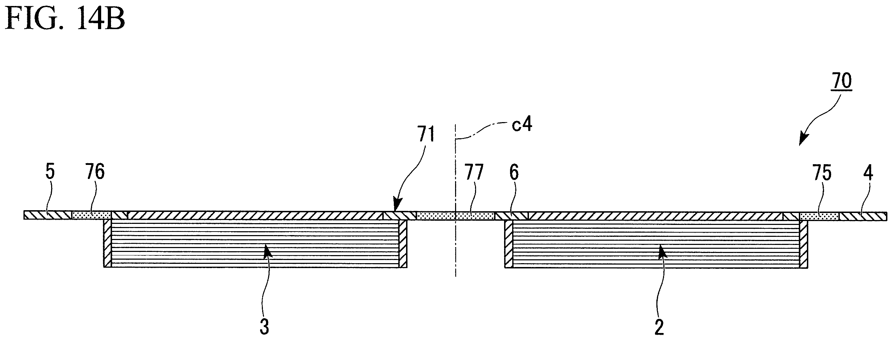

As shown in FIG. 14A and FIG. 14B, the nonaqueous electrolyte secondary battery 70 of the 4th embodiment includes the 1st electrode group 2, the 2nd electrode group 3, the positive electrode lead 4 connected to the positive electrode of the 1st electrode group 2; the negative electrode lead 5 connected to the negative electrode of the 2nd electrode group 3; and the connection lead 6 connecting the 1st electrode group 2 and the 2nd electrode group 3 in series, and the exterior material 71 housing the 1 st electrode group 2, the 2nd electrode group 3, the positive electrode lead 4, the negative electrode lead 5 and the connection lead 6.

As the exterior material 71, a metal container can be used.

The shape of the nonaqueous electrolyte secondary battery 70 is not limited to a rectangular shape, and can be various shapes such as a flat shape (a thin shape).

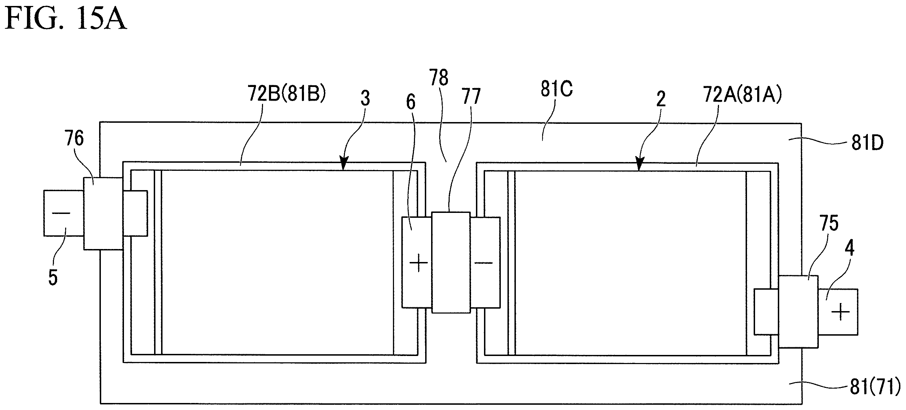

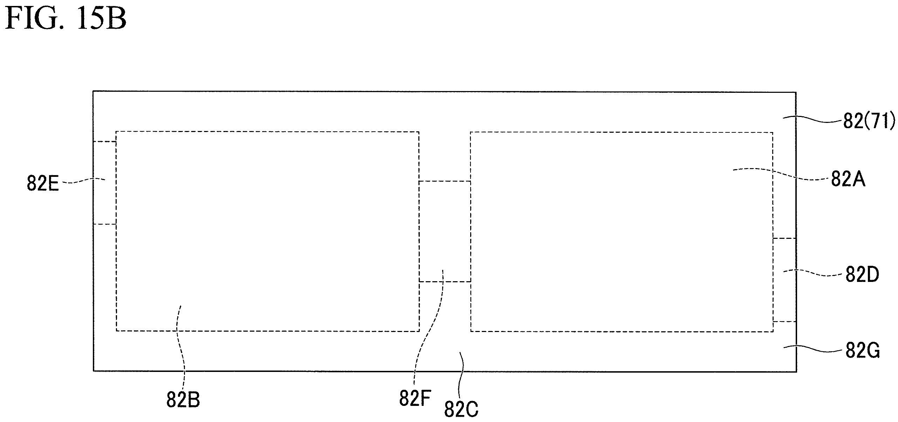

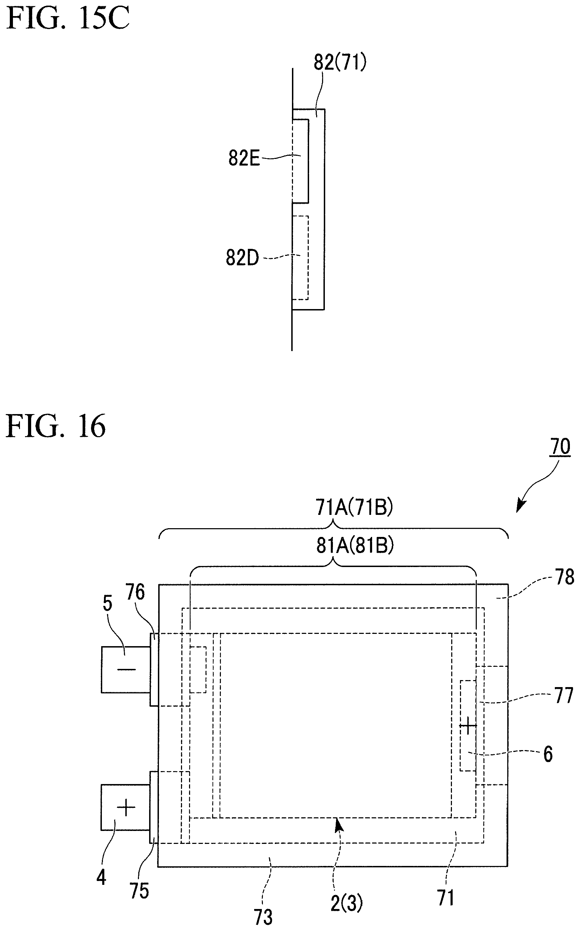

As shown in FIG. 15A and FIG. 15B, the exterior material 71 is comprised of the 1st casing unit 81 having a substantially rectangular planer shape and the 2nd casing unit 82 which has a substantially rectangular planer shape and a principal surface facing the 1st casing unit 81. In the example shown in FIG. 15A and FIG. 15B, the 1st casing unit 81 and the 2nd casing unit 82 are not connected, and exist as separate members. Herein, in the present embodiment, the exterior material 71 can be formed by connecting the 1 st casing unit 81 and the 2nd casing unit 82 through the folding part, and the exterior material can be folded through the folding part.

Also, the exterior material 71 shown in FIG. 14A, FIG. 14B, FIG. 15A and FIG. 15B includes the 1 st housing part 72A which houses the 1 st electrode group 2, the 2nd housing part 72B which houses the 2nd electrode group 3, the sealing part 73 which seals the 1 st housing part 72A and the 2nd housing part 72B, the terminal housing part 74A which communicates the 1 st housing part 72A and houses the terminal of the 1 st electrode group 2 and the positive electrode lead 4, the terminal housing part 74B which communicates the 2nd housing part 72B and houses the terminal of the 2nd electrode group 3 and the negative electrode lead 5, the terminal housing part 74C which communicates the 1st housing part 72A and the 2nd housing part 72B, and houses the terminal of the 1 st electrode group 2, the terminal of the 2nd electrode group 3 and the connection lead 6, and the connection part 78 which connects the 1st housing part 72A and the 2nd housing part 72B. Also, the exterior material 71 is comprised of the 1st region 71 A which houses the 1st electrode group 2 and the 2nd region 71B which houses the 2nd electrode group 3.

The 1 st housing part 72A, the 2nd housing part 72B, the connection part 78 and the sealing part 73 are formed by integrating the 1st casing unit 81 and the 2nd casing unit 82.

Hereinafter, the 1st casing unit 81 and the 2nd casing unit 82 are described.

The 1 st casing unit 81 and the 2nd casing unit 82 constituting the exterior material 71 are formed from a thin plate of a metal such as aluminum, an aluminum alloy, iron, nickel-plated iron and stainless steel.

The thickness of a thin plate is preferably 0.5 mm or less, and more preferably 0.3 mm or less.

The 1st casing unit 81 is formed by subjecting a metal thin plate to a deep drawing process or press working. The 1st casing unit 81 includes the housing part 81A and the housing part 81B which are a rectangular concave part, and the plate-shaped extending part 81C provided so as to extend from the four sides defining the housing part 81A and the housing part 81B toward the outer periphery of a metal thin plate. Also, the outer peripheral part (extending part 81C) of a metal thin plate forming the 1st casing unit 81 becomes the sealing part 81D.

The 1 st housing part 81 is a plate-like member obtained by processing a metal thin plate in a substantially rectangular shape or a plate-like member obtained by subjecting a metal thin plate to a bulge-forming process so as to form a housing part.

The 2nd casing unit 82 is formed by subjecting a metal thin plate to a deep drawing process or press working. The 2nd casing unit 82 is arranged so as to face the 1st casing unit 81 when the exterior material 71 is formed by using the second casing unit. This 2nd casing unit 82 includes the housing part 82A which faces the housing part 81 A of the 1st casing unit 81 and is formed as a rectangular-shaped concave part, the housing part 82B which faces the housing part 81B of the 1st casing unit 81 and is formed as a rectangular-shaped concave part, the plate-shaped extending part 82C provided so as to extend from the four sides defining the housing part 82A and the housing part 82B toward the outer periphery of a metal thin plate, the housing part 82D which is provided at the extending part 82C and communicates the housing part 81 A so as to form the terminal housing part 74A, the housing part 82E which communicates the housing part 81B so as to form the terminal housing part 74B, and the housing part 82F which communicates the housing part 81A and the housing part 81B so as to form the terminal housing part 74C. Also, the outer peripheral part (extending part 82C) of a metal thin plate forming the 2nd casing unit 82 becomes the sealing part 82G.

The 2nd casing unit 82 is a plate-like member obtained by processing a metal thin plate in a substantially rectangular shape or a plate-like member obtained by subjecting a metal thin plate to a bulge-forming process so as to form a housing part.

The exterior material 71 is formed by laminating the 1 st casing unit 81 and the 2nd casing unit 82 so as to face each other, stacking and welding the sealing part 81D and the sealing part 82G so as to integrate the 1st casing unit 81 and the 2nd casing unit 82. Also, the 1st housing part 72A is configured by integrating the housing parts 81A and the housing part 82A. Also, the 2nd housing part 82B is configured by integrating the housing parts 81B and the housing part 72B. Also, the connection part 78, which connects the 1 st housing part 72A and the 2nd housing part 72B, is formed by welding the part connecting the 1st housing part 72A and the 2nd housing part 72B in the outer peripheral parts of the 1st casing unit 81 and the 2nd casing unit 82. Moreover, the sealing part 73, which seals the 1st housing part 72A and the 2nd housing part 72B, is formed by welding the sealing part 81D and the sealing part 82G which are the outer peripheral parts of the 1st casing unit 81 and the 2nd casing unit 82.

The sealing part 73 is formed by seam welding the metal thin plate forming the 1 st casing unit 81 and the metal thin plate forming the 2nd casing unit 82.

Also, the connection part 78 is the common sealing part which collectively seals the 1 st housing part 72A and the 2nd housing part 72B.

It is preferable that at least the part of the surface of the positive electrode lead 4, which passes through the sealing part 73, be coated with the insulating resin layer 75. Also, it is preferable that at least the part of the surface of the negative electrode lead 5, which passes through the sealing part 73, be coated with the insulating resin layer 76. Also, it is preferable that at least the part of the surface of the connection lead 6, which passes through the connection part 78, be coated with the insulating resin layer 77. The exterior material 71, the positive electrode lead 4, the negative electrode lead 5 and the connection lead 6 are insulated by the insulating resin layers 75, 76, 77. Also, the positive electrode lead 4 and the insulating resin layer 75 can be bonded to each other, heat-sealed to each other or crimped to each other. These can be only placed as long as it is possible to obtain the effect of the present embodiment. In the same manner, the negative electrode lead 5 and the insulating resin layer 76 can be bonded to each other, heat-sealed to each other or crimped to each other. These can be only placed as long as it is possible to obtain the effect of the present embodiment. In the same manner, the connection lead 6 and the insulating resin layer 77 can be bonded to each other, heat-sealed to each other or crimped to each other. These can be only placed as long as it is possible to obtain the effect of the present embodiment.

The thickness of the insulating resin layers 75, 76, 77 (per one surfaces of the positive electrode lead 4, the negative electrode 5 and the connection lead 6) is preferably within a range of 40 µm to 200 µm, and more preferably a range of 60 µm to 100 µm.

The insulating resin forming the insulating resin layers 75, 76, 77 is not particularly limited, and for example, a thermoplastic resin can be used. Examples of a thermoplastic resin include polyethylene (PE) and polypropylene (PP).

In the nonaqueous electrolyte secondary battery 70 of the 4th embodiment, the 1 st electrode group 2 and the 2nd electrode group 3, which include the positive electrode 31 containing an iron-containing phosphorus compound which has an olivine structure and is represented by LiₓFe_{1-y}Mn_{y}A_{z}PO₄ (A represents at least one selected from the group consisting of V, Mg, Ni, Al, Sn, Zr and Nb, 0≤x≤1.1, 0≤y≤0.2, and 0≤z≤0.2) and the negative electrode 32 containing the titan-containing oxide, are electrically connected in series. Also, the nonaqueous electrolyte secondary battery has an average discharge voltage of about 3.6 V at a charge maximum voltage within a range of 4 V or more and 5 V or less. For these reasons, the nonaqueous electrolyte secondary battery can have voltage compatibility with a conventional lithium ion battery. Accordingly, it is possible to interchange the protective circuit for overcurrent protection, overcharge prevention and overdischarge prevention which is used for a conventional lithium ion battery.

Also, in the nonaqueous electrolyte secondary battery 70 of the 4th embodiment, for example, the exterior material 71 can be folded along the center line c4, which passes through the connection part 78 of the common sealing part so as to stack the 1st housing part 72A (1st region 71A) and the 2nd housing part 72B (2nd region 71B).

The nonaqueous electrolyte secondary battery 70 can be folded in the same manner as the nonaqueous electrolyte secondary battery 1 of the 1st embodiment.

When stacking the 1 st region 71 A and the 2nd region 71 B, as shown in FIG. 16, the positive electrode lead 4 connected to the positive electrode current collector tab 34 and the negative electrode lead 5 connected to the negative electrode current collector tab 35 are alternately arranged so as not to overlap with each other.

In the 4th embodiment, the 1st region 71A and the 2nd region 71B are stacked so as to fold the nonaqueous electrolyte secondary battery 70. Thus, it is possible to reduce the size of the nonaqueous electrolyte secondary battery 70, and the degree of spatial freedom is improved when the nonaqueous electrolyte secondary battery 70 is mounted in a motor vehicle, etc.

Herein, the nonaqueous electrolyte secondary battery 70 of the 4th embodiment having foldability is achieved by well decreasing the thickness of the metal plate forming the exterior material 71 and by increasing the bending radius of the folded part of the exterior material 71 (the part in which the connecting lead 6 exists).

### (Fifth Embodiment)

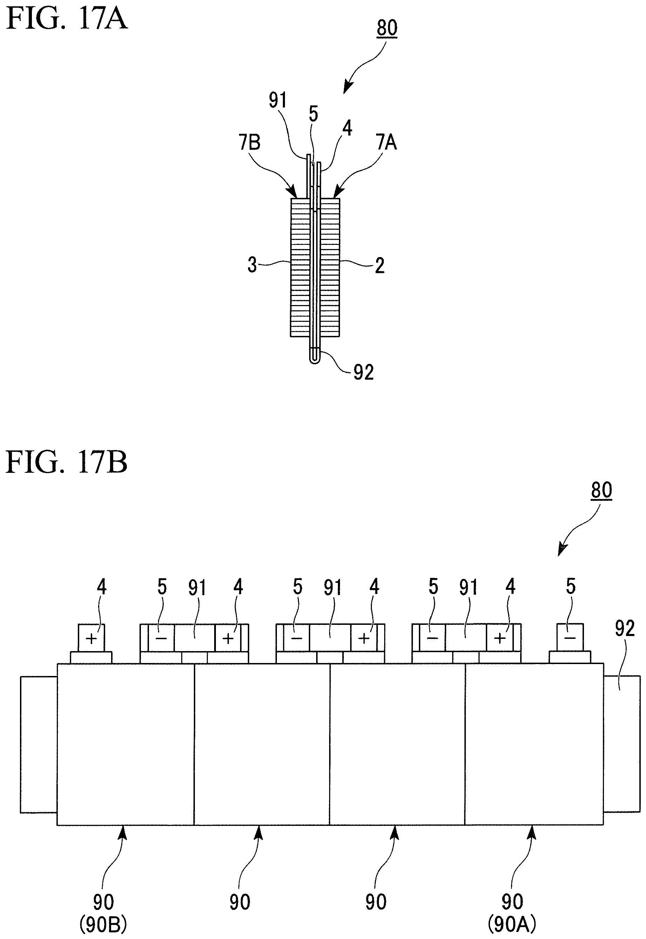

Hereinafter, the 5th embodiment is described with reference to FIG. 17A and FIG. 17B.

In the following description, the same reference signs are assigned to the features which correspond to the features described in the 1 st embodiment with reference to FIG. 1A, FIG. 1 B, FIG. 2 to FIG. 4, FIG. 5A, FIG. 5B, FIG. 6A, FIG. 6B, FIG. 7A, FIG. 7B, FIG. 8 and FIG. 9, and the detailed descriptions thereof are omitted. Also, the features, which are not illustrated in FIG. 17A and FIG. 17B, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, etc.

The assembled battery 80 of the 5th embodiment includes, for example, the 4 nonaqueous electrolyte secondary batteries 90 comprised of the nonaqueous electrolyte secondary battery 1 of the 1 st embodiment.

The assembled battery 80 of the 5th embodiment includes the 4 nonaqueous electrolyte secondary batteries 90, the bus bars 91 connecting these nonaqueous electrolyte secondary batteries 90 in series, and the heat-releasing member 92 interposed between the 1 st region 7A and the 2nd region 7B.

In the present embodiment, the 1 st region 7A (1st housing part 8A) and the 2nd region 7B (2nd housing part 8B) are stacked through the heat-releasing member 92 such that the cap part 22A covering the opening part of the housing part 21 A, which houses the 1 st electrode group 2, and the cap part 22B covering the opening part of the housing part 21B, which houses the 2nd electrode group 3, face each other. Also, the 4 nonaqueous electrolyte secondary batteries 90 are adjacently arranged in a line. The heat-releasing member 92 is provided in a state of being interposed between the 1st region 7A and the 2nd region 7B which constitute the respective 4 nonaqueous electrolyte secondary batteries 90, for example, such that the heat-releasing member protrudes from the nonaqueous electrolyte secondary battery 90 (90A) located on one end of the 4 nonaqueous electrolyte secondary batteries 90 in the longitudinal direction of the assembled battery 80 (the horizontal direction of the paper in FIG. 17B) and that the heat-releasing member protrudes from the nonaqueous electrolyte secondary battery 90 (90B) located on the other end of the 4 nonaqueous electrolyte secondary batteries 90 in the longitudinal direction of the assembled battery 80 (the horizontal direction of the paper in FIG. 17B).

Between the adjacent nonaqueous electrolyte secondary batteries 90, 90, the negative electrode lead 5 of one nonaqueous electrolyte secondary battery 90 and the positive electrode lead 4 of the other nonaqueous electrolyte secondary battery 90 are connected through the bus bar 91.

The bus bar 91 is a metal member and has electroconductivity.

As the heat-releasing member 92, for example, it is possible to use a material having a good thermal conductivity such as a metal plate formed from copper, aluminum, an aluminum alloy, iron or stainless steel, etc.

In the assembled battery 80 of the present embodiment, the 4 nonaqueous electrolyte secondary batteries 90 are adjacently arranged, these nonaqueous electrolyte secondary batteries 90 are connected in series, and the heat-releasing member 92 is interposed between the 1st region 7A and the 2nd region 7B which constitute the respective 4 nonaqueous electrolyte secondary batteries 90. For these reasons, it is possible to efficiently release the heat generated during the charge and discharge of the nonaqueous electrolyte secondary battery 90.

Herein, the present embodiment describes the case in which the nonaqueous electrolyte secondary battery 90 is the nonaqueous electrolyte secondary battery 1 of the 1st embodiment, but the present embodiment is not limited thereto. In the present embodiment, the nonaqueous electrolyte secondary battery 90 can be any of the nonaqueous electrolyte secondary battery 50 of the 2nd embodiment, the nonaqueous electrolyte secondary battery 60 of the 3rd embodiment and the nonaqueous electrolyte secondary battery 70 of the 4th embodiment.

### (Sixth Embodiment)

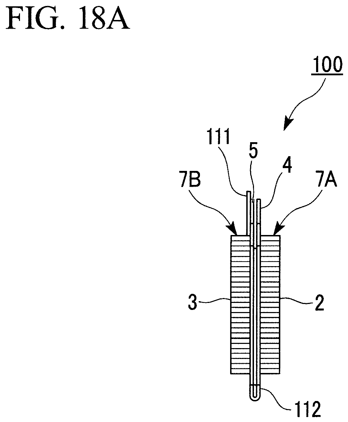

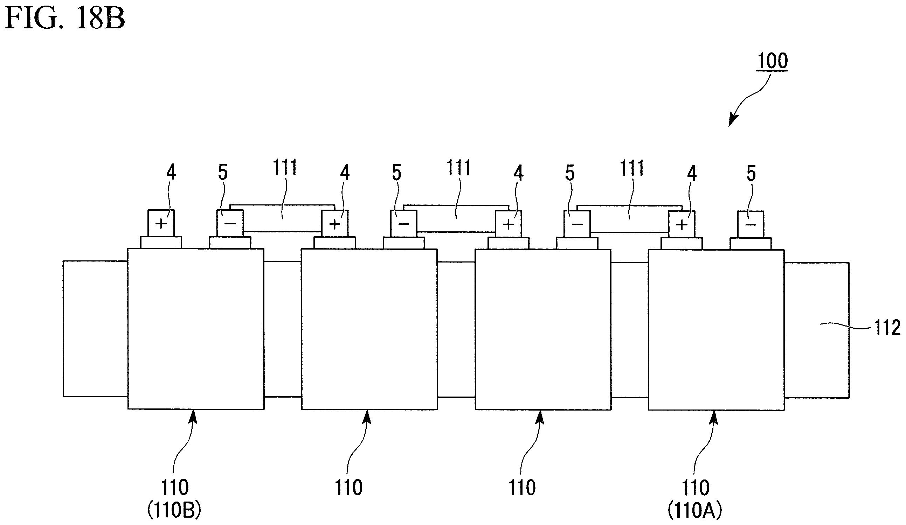

Hereinafter, the 6th embodiment is described with reference to FIG. 18A and FIG. 18B.

In the following description, the same reference signs are assigned to the features which correspond to the features described in the 1st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, and the detailed descriptions thereof are omitted. Also, the features, which are not illustrated in FIG. 18A and FIG. 18B, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, etc.

The assembled battery 100 of the 6th embodiment includes, for example, the 4 nonaqueous electrolyte secondary batteries 110 comprised of the nonaqueous electrolyte secondary battery 1 of the 1st embodiment.

The assembled battery 100 of the 6th embodiment includes the 4 nonaqueous electrolyte secondary batteries 110, the bus bars 111 connecting these nonaqueous electrolyte secondary batteries 110 in series, and the heat-releasing member 112 interposed between the 1st region 7A and the 2nd region 7B.

In the present embodiment, the 1 st region 7A (1st housing part 8A) and the 2nd region 7B (2nd housing part 8B) are stacked through the heat-releasing member 112 such that the cap part 22A covering the opening part of the housing part 21 A, which houses the 1st electrode group 2, and the cap part 22B covering the opening part of the housing part 21B, which houses the 2nd electrode group 3, face each other. Also, the 4 nonaqueous electrolyte secondary batteries 110 are arranged in a line having spaces.

The heat-releasing member 112 is provided in a state of being interposed between the 1 st region 7A and the 2nd region 7B which constitute the respective 4 nonaqueous electrolyte secondary batteries 110, for example, such that the heat-releasing member protrudes from the nonaqueous electrolyte secondary battery 110 (110A) located on one end of the 4 nonaqueous electrolyte secondary batteries 110 in the longitudinal direction of the assembled battery 100 (the horizontal direction of the paper in FIG. 18B) and that the heat-releasing member protrudes from the nonaqueous electrolyte secondary battery 110 (110B) located on the other end of the 4 nonaqueous electrolyte secondary batteries 110 in the longitudinal direction of the assembled battery 100 (the horizontal direction of the paper in FIG. 18B).

Also, the heat-releasing member 112 is exposed between the adjacent nonaqueous electrolyte secondary batteries 110, 110.

Betwenn the adjacent nonaqueous electrolyte secondary batteries 110, 110, the negative electrode lead 5 of one nonaqueous electrolyte secondary battery 110 and the positive electrode lead 4 of the other nonaqueous electrolyte secondary battery 110 are connected through the bus bar 111.

The bus bar 111 is a metal member and has electroconductivity.

As the heat-releasing member 112, for example, it is possible to use a material having a good thermal conductivity such as a metal plate formed from copper, aluminum, an aluminum alloy, iron or stainless steel, etc.

In the assembled battery 100 of the present embodiment, the 4 nonaqueous electrolyte secondary batteries 110 are arranged in a line having spaces, these nonaqueous electrolyte secondary batteries 110 are connected in series, and the heat-releasing member 112 is interposed between the 1 st region 7A and the 2nd region 7B which constitute the respective 4 nonaqueous electrolyte secondary batteries 110. For these reasons, it is possible to efficiently release the heat generated during the charge and discharge of the nonaqueous electrolyte secondary battery 110. Also, in the assembled battery 100, the heat-releasing member 112 protrudes from both ends thereof, and the heat-releasing member 112 is exposed between the adjacent nonaqueous electrolyte secondary batteries 110, 110. For these reasons, it is possible to more efficiently release the heat.

Herein, the present embodiment describes the case in which the nonaqueous electrolyte secondary battery 110 is the nonaqueous electrolyte secondary battery 1 of the 1st embodiment, but the present embodiment is not limited thereto. In the present embodiment, the nonaqueous electrolyte secondary battery 110 can be any of the nonaqueous electrolyte secondary battery 50 of the 2nd embodiment, the nonaqueous electrolyte secondary battery 60 of the 3rd embodiment and the nonaqueous electrolyte secondary battery 70 of the 4th embodiment.

### (Seventh Embodiment)

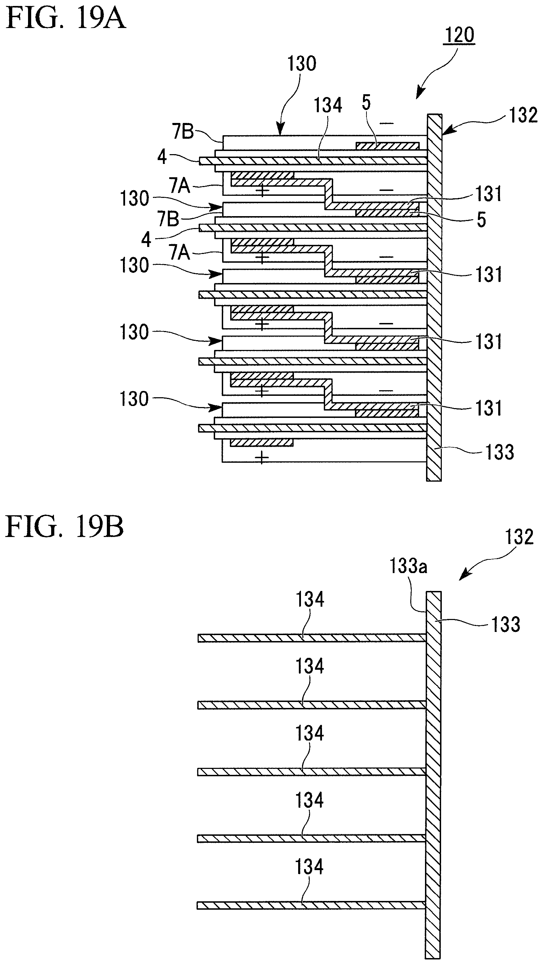

Hereinafter, the 7th embodiment is described with reference to FIG. 19A and FIG. 19B.

In the following description, the same reference signs are assigned to the features which correspond to the features described in the 1 st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, and the detailed descriptions thereof are omitted. Also, the features, which are not illustrated in FIG. 19A and FIG. 19B, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, etc.

The assembled battery 120 of the 7th embodiment includes, for example, the 5 nonaqueous electrolyte secondary batteries 130 comprised of the nonaqueous electrolyte secondary battery 1 of the 1 st embodiment.

The assembled battery 120 of the 7th embodiment includes the 5 nonaqueous electrolyte secondary batteries 130, the bus bars 131 connecting these nonaqueous electrolyte secondary batteries 130 in series, and the heat-releasing member 132 interposed between the 1st region 7A and the 2nd region 7B.

The heat-releasing member 132 includes the base part 133 and the 5 heat-releasing parts 134 provided vertically on one surface 133a of the base part 133. The heat-releasing parts 134 are arranged in parallel with spaces on one surface 133a of the base part 133.

As the heat-releasing member 132, for example, it is possible to use a material having a good thermal conductivity such as a metal plate made from copper, aluminum, an aluminum alloy, iron or stainless steel, etc.

In the present embodiment, the 1 st region 7A (1 st housing part 8A) and the 2nd region 7B (2nd housing part 8B) are stacked through the heat-releasing part 134 of the heat-releasing member 132 such that the cap part 22A covering the opening part of the housing part 21 A, which houses the 1st electrode group 2, and the cap part 22B covering the opening part of the housing part 21B, which houses the 2nd electrode group 3, face each other.

The heat-releasing member 132 is provided in a state of being interposed between the 1 st region 7A and the 2nd region 7B which constitute the respective 5 nonaqueous electrolyte secondary batteries 130 such that the heat-releasing part 134 protrudes from one end of the nonaqueous electrolyte secondary batteries 130 (on the left side of the paper in FIG. 19A) and that the base part 133 contacts the other end of the nonaqueous electrolyte secondary batteries 130 (on the right side of the paper in FIG. 19A).

Also, all of the nonaqueous electrolyte secondary batteries 130 are arranged with respect to the heat-releasing parts 134 of the heat-releasing member 132 such that the positive electrode leads 4 and the negative electrode leads 5 are in the same direction. In other words, as shown in FIG. 19A, all of the nonaqueous electrolyte secondary batteries 130 are arranged with respect to the heat-releasing parts 134 of the heat-releasing member 132 such that the negative electrode leads 5 are located on the upper side of the heat-releasing parts 134 of the heat-releasing member 132 and that the positive electrode leads 4 are located on the lower side of the heat-releasing parts 134 of the heat-releasing member 132.

Between the adjacent nonaqueous electrolyte secondary batteries 130, 130, the positive electrode lead 4 of one nonaqueous electrolyte secondary battery 130 and the negative electrode lead 5 of the other nonaqueous electrolyte secondary battery 130 are connected through the bus bar 131.

The bus bar 131 is a metal member and has electroconductivity.

In the assembled battery 120 of the present embodiment, the 5 nonaqueous electrolyte secondary batteries 130 are adjacently arranged, these nonaqueous electrolyte secondary batteries 130 are connected in series, and the heat-releasing parts 134 of the heat-releasing member 132 are interposed between the 1st regions 7A and the 2nd regions 7B which constitute the respective 5 nonaqueous electrolyte secondary batteries 130. For these reasons, it is possible to efficiently release the heat generated during the charge and discharge of the nonaqueous electrolyte secondary battery 130. Also, all of the heat-releasing parts 134 are arranged on one surface 133 of the base part 133, and thus, by cooling the base part 133, it is possible to cool all of the heat-releasing parts 134 and eventually all of the nonaqueous electrolyte secondary batteries 130.

Herein, the present embodiment describes the case in which the nonaqueous electrolyte secondary battery 130 is the nonaqueous electrolyte secondary battery 1 of the 1st embodiment, but the present embodiment is not limited thereto. In the present embodiment, the nonaqueous electrolyte secondary battery 130 can be any of the nonaqueous electrolyte secondary battery 50 of the 2nd embodiment, the nonaqueous electrolyte secondary battery 60 of the 3rd embodiment and the nonaqueous electrolyte secondary battery 70 of the 4th embodiment.

### (Eighth Embodiment)

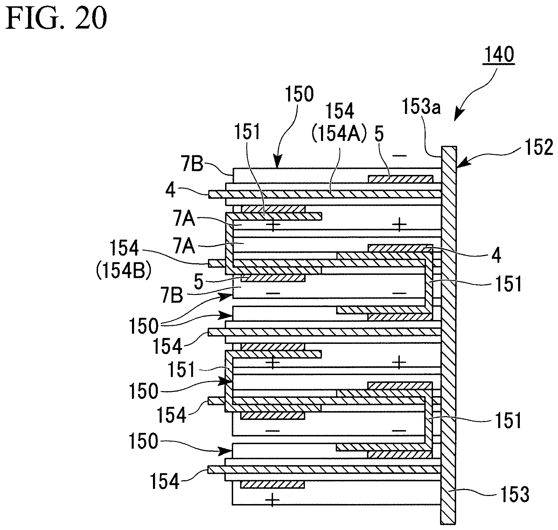

Hereinafter, the 8th embodiment is described with reference to FIG. 20.

In the following description, the same reference signs are assigned to the features which correspond to the features described in the 1 st embodiment with reference to FIG. 1 A, FIG. 1 B, FIG. 2 to FIG. 4, FIG. 5A,FIG. 5B, FIG. 6A, FIG. 6B, FIG. 7A, FIG. 7B, FIG. 8 and FIG. 9, and the detailed descriptions thereof are omitted. Also, the features, which are not illustrated in FIG. 20, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9, etc.

The assembled battery 140 of the 8th embodiment includes, for example, the 5 nonaqueous electrolyte secondary batteries 150 comprised of the nonaqueous electrolyte secondary battery 1 of the 1 st embodiment.

The assembled battery 140 of the 8th embodiment includes the 5 nonaqueous electrolyte secondary batteries 150, the bus bars 151 connecting these nonaqueous electrolyte secondary batteries 150 in series, and the heat-releasing member 152 interposed between the 1st region 7A and the 2nd region 7B.

The heat-releasing member 152 includes the base part 153 and the 5 heat-releasing parts 154 provided vertically on one surface 153a of the base part 153. The heat-releasing parts 154 are arranged in parallel with spaces on one surface 153a of the base part 153.

As the heat-releasing member 152, for example, it is possible to use a material having a good thermal conductivity such as a metal plate made from copper, aluminum, an aluminum alloy, iron or stainless steel, etc.

In the present embodiment, the 1 st region 7A (1st housing part 8A) and the 2nd region 7B (2nd housing part 8B) are stacked through the heat-releasing part 154 of the heat-releasing member 152 such that the cap part 22A covering the opening part of the housing part 21 A, which houses the 1st electrode group 2, and the cap part 22B covering the opening part of the housing part 21B, which houses the 2nd electrode group 3, face each other.

The heat-releasing member 152 is provided in a state of being interposed between the I st region 7A and the 2nd region 7B which constitute the respective 5 nonaqueous electrolyte secondary batteries 150 such that the heat-releasing part 154 protrudes from one end of the nonaqueous electrolyte secondary batteries 150 (on the left side of the paper in FIG. 20) and that the base part 153 contacts the other end of the nonaqueous electrolyte secondary batteries 150 (on the right side of the paper in FIG. 20).

Also, the nonaqueous electrolyte secondary batteries 150 are arranged with respect to the heat-releasing parts 154 of the heat-releasing member 152 such that the directions of the positive electrode leads 4 and the negative electrode leads 5 are alternately changed. In the present embodiment, as shown in FIG. 20, the nonaqueous electrolyte secondary batteries 150 are arranged with respect to the heat-releasing parts 154A of the heat-releasing member 152 such that the negative electrode lead 5 is located on the upper side of the heat-releasing part 154A provided on one end of the heat-releasing member 152 and that the positive electrode lead 4 is located on the lower side of the heat-releasing part 154A. Also, as shown in FIG. 20, the nonaqueous electrolyte secondary batteries 150 are arranged with respect to the heat-releasing parts 154B of the heat-releasing member 152 such that the positive electrode lead 4 is located on the upper side of the heat-releasing part 154B adjacent to the heat-releasing part 154A and that the negative electrode lead 5 is located on the lower side of the heat-releasing part 154B. In the same manner, the nonaqueous electrolyte secondary batteries are arranged with respect to the heat-releasing parts 154 of the heat-releasing member 152 such that the directions of the positive electrode leads 4 and the negative electrode leads 5 are alternately changed.

Between the adjacent nonaqueous electrolyte secondary batteries 150, 150, the positive electrode lead 4 of one nonaqueous electrolyte secondary battery 150 and the negative electrode lead 5 of the other nonaqueous electrolyte secondary battery 150 are connected through the bus bar 151.

The bus bar 151 is a metal member and has electroconductivity.

In the assembled battery 140 of the present embodiment, the 5 nonaqueous electrolyte secondary batteries 150 are adjacently arranged, these nonaqueous electrolyte secondary batteries 150 are connected in series, and the heat-releasing parts 154 of the heat-releasing member 152 are interposed between the 1st regions 7A and the 2nd regions 7B which constitute the respective 5 nonaqueous electrolyte secondary batteries 150. For these reasons, it is possible to efficiently release the heat generated during the charge and discharge of the nonaqueous electrolyte secondary battery 150. Also, all of the heat-releasing parts 154 are arranged on one surface 153 of the base part 153, and thus, by cooling the base part 153, it is possible to cool all of the heat-releasing parts 154 and eventually all of the nonaqueous electrolyte secondary batteries 150.

Herein, the present embodiment describes the case in which the nonaqueous electrolyte secondary battery 150 is the nonaqueous electrolyte secondary battery 1 of the 1st embodiment, but the present embodiment is not limited thereto. In the present embodiment, the nonaqueous electrolyte secondary battery 150 can be any of the nonaqueous electrolyte secondary battery 50 of the 2nd embodiment, the nonaqueous electrolyte secondary battery 60 of the 3rd embodiment and the nonaqueous electrolyte secondary battery 70 of the 4th embodiment.

### (Ninth Embodiment)

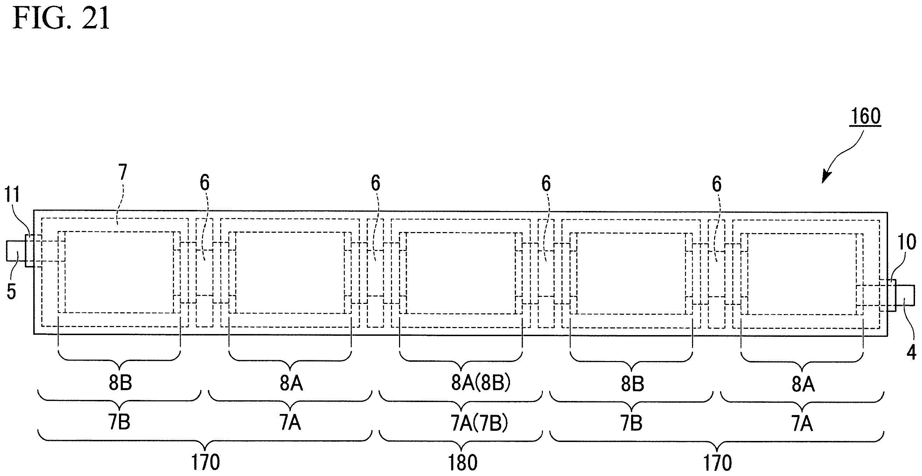

Hereinafter, the 9th embodiment is described with reference to FIG. 21, FIG. 22, FIG. 23A and FIG. 23B.

In the following description, the same reference signs are assigned to the features which correspond to the features described in the 1st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9 and the features described in the 2nd embodiment with reference to FIG. 10A, FIG. 10B, FIG. 11A, FIG. 11B, FIG. 12A and FIG. 12B, and the detailed descriptions thereof are omitted. Also, the features, which are not illustrated in FIG. 21, FIG. 22, FIG. 23A and FIG. 23B, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8, FIG. 9, FIG. 10A, FIG. 10B, FIG. 11A, FIG. 11B, FIG. 12A and FIG. 12B.

The assembled battery 160 of the 9th embodiment includes, for example, the 2 nonaqueous electrolyte secondary batteries 170 comprised of the nonaqueous electrolyte secondary battery 50 of the 2nd embodiment; and the nonaqueous electrolyte secondary battery 180 having the same structure as the 1st region 7A or the 2nd region 7B of the nonaqueous electrolyte secondary battery 50 which connect these nonaqueous electrolyte secondary batteries in series.

In the present embodiment, the 1st region 7A (1st housing part 8A) and the 2nd region 7B (2nd housing part 8B) are stacked such that the bottom surface 21 a of the housing part 21 A, which houses the 1 st electrode group 2, and the bottom surface 21 a of the housing part 21B, which houses the 2nd electrode group 3, face each other.

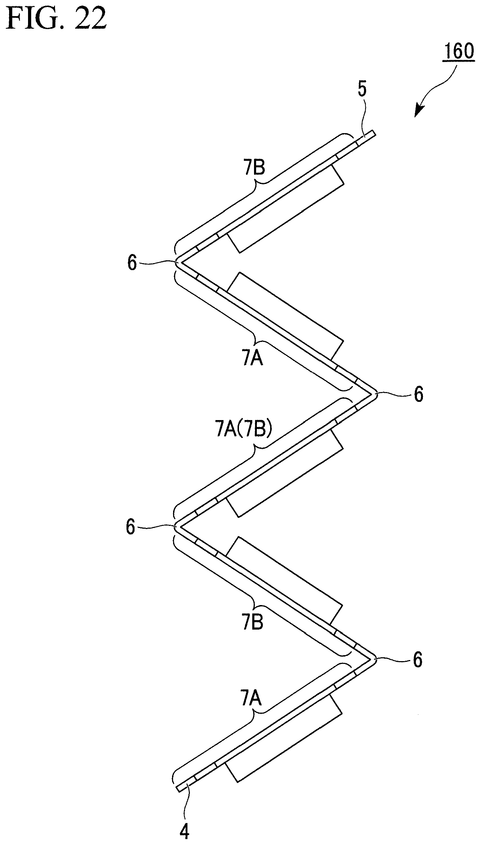

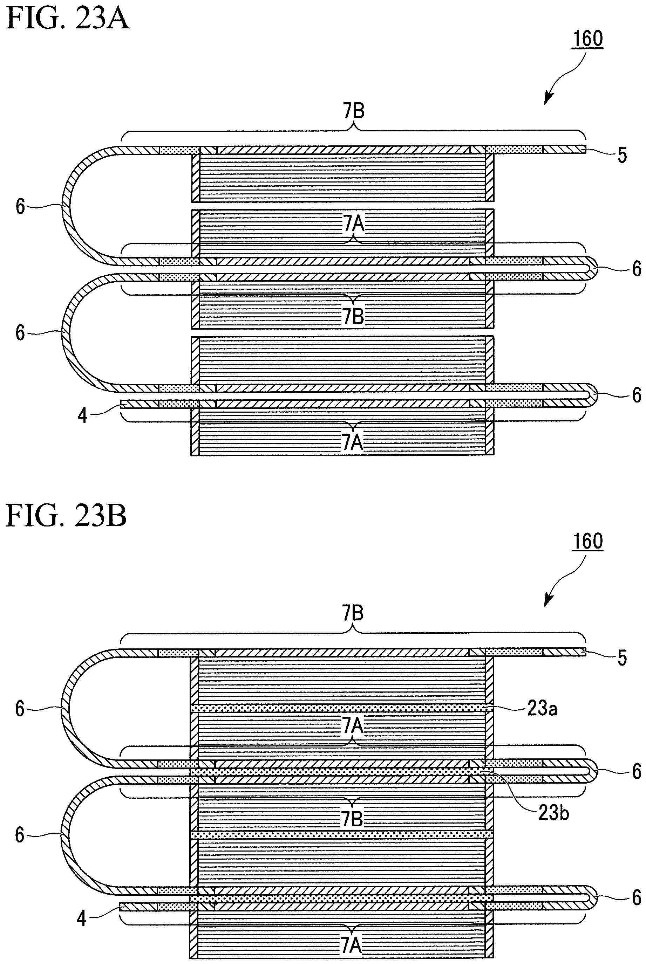

Specifically, as shown in FIG. 22, FIG. 23A and FIG. 23B, the 1st region 7A and the 2nd region 7B are arranged in a switchback shape so as to stack the 1 st region 7A and the 2nd region 7B.

FIG. 22 shows the case in which the bending radius of the folding part of the exterior material 7 between the 1st region 7A and the 2nd region 7B is small. Also, FIG. 23A and FIG 23B show the case in which the bending radius of the folding part of the exterior material 7 between the 1st region 7A and the 2nd region 7B is large.

FIG. 23A shows that the 1st region 7A and the 2nd region 7B are stacked and the empty space may exist between the members facing each other. However, the members facing each other can be adhesively fixed if necessary. Also, FIG. 23B shows that the 1st region 7A and the 2nd region 7B are stacked through the heat-releasing members 23a, 23b applied between the members facing each other. In this case, it is preferable that the first region and the second region be stacked through an unillustrated adhesive fixing layer. The 1st region 7A and the 2nd region 7B are adhesively fixed by the adhesive fixing layer.

In the assembled battery 160 of the present embodiment, the 1st region 7A and the 2nd region 7B, which constitute the nonaqueous electrolyte secondary battery 170 and the nonaqueous electrolyte secondary battery 180, are arranged in a switchback shape so as to stack the 1st region 7A and the 2nd region 7B. Thus, it is possible to reduce the size of the nonaqueous electrolyte secondary battery, and the degree of spatial freedom is improved when the nonaqueous electrolyte secondary battery is mounted in a motor vehicle, etc.

Herein, the present embodiment describes the case in which the nonaqueous electrolyte secondary battery 170 is the nonaqueous electrolyte secondary battery 50 of the 2nd embodiment, but the present embodiment is not limited thereto. In the present embodiment, the nonaqueous electrolyte secondary battery 170 can be any of the nonaqueous electrolyte secondary battery 1 of the 1st embodiment, the nonaqueous electrolyte secondary battery 60 of the 3rd embodiment and the nonaqueous electrolyte secondary battery 70 of the 4th embodiment.

### (Tenth Embodiment)

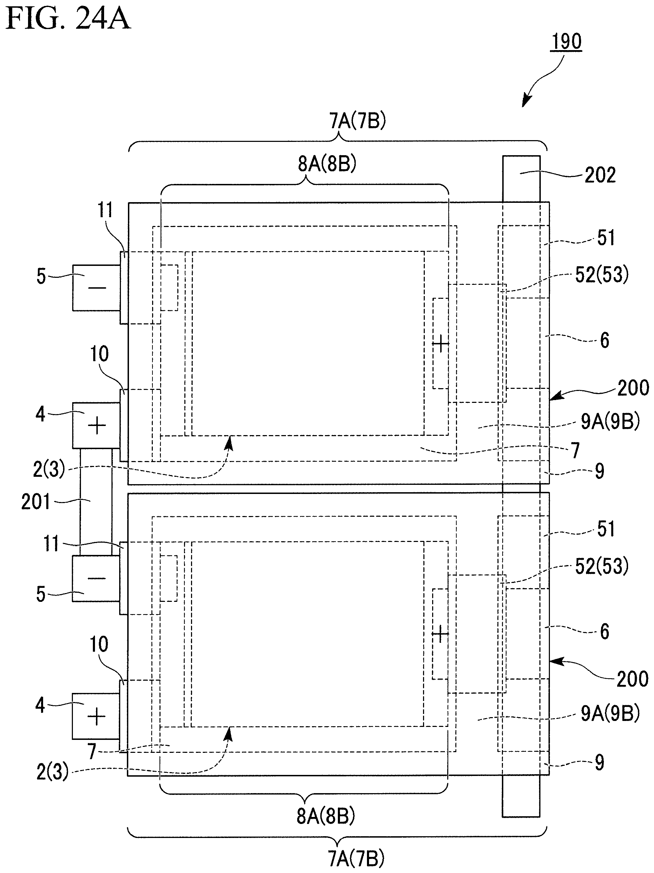

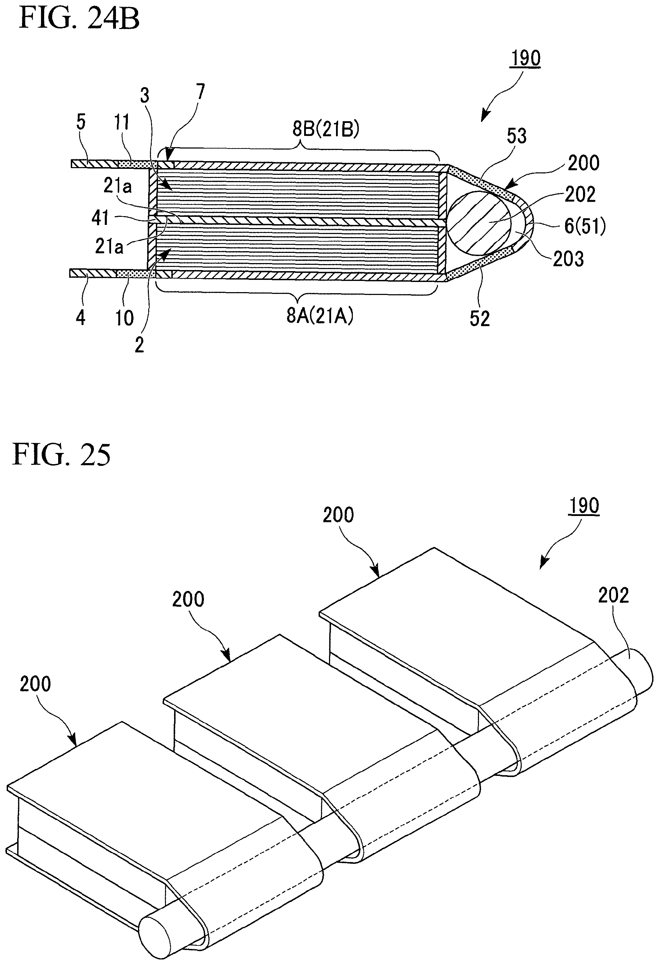

Hereinafter, the 10th embodiment is described with reference to FIG. 24A, FIG. 24B and FIG. 25.

In the following description, the same reference signs are assigned to the features which correspond to the features described in the 1 st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9 and the features described in the 2nd embodiment with reference to FIG. 10A, FIG. 10B, FIG. 11A, FIG. 11B, FIG. 12A and FIG. 12B, and the detailed descriptions thereof are omitted. Also, the features, which are not illustrated in FIG. 24A, FIG. 24B and FIG. 25, may be described by borrowing the reference signs illustrated in FIG. 1A, FIG. 1B, FIG. 2 to FIG. 4, FIG. 5A, FIG. 5B, FIG. 6A, FIG. 6B, FIG. 7A, FIG. 7B, FIG. 8, FIG. 9, FIG. 10A, FIG. 10B, FIG. 11 A, FIG. 11B, FIG. 12A and FIG. 12B.

The assembled battery 190 of the 10th embodiment includes, for example, the 2 nonaqueous electrolyte secondary batteries 200 comprised of the nonaqueous electrolyte secondary battery 50 of the 2nd embodiment, the bus bar 201 connecting these nonaqueous electrolyte secondary batteries 200 in series; and the linking member 202 linking the 2 nonaqueous electrolyte secondary batteries 200.

In the present embodiment, the 1 st region 7A (1 st housing part 8A) and the 2nd region 7B (2nd housing part 8B) are stacked through the adhesive fixing layer 41 in the nonaqueous electrolyte secondary battery 200 such that the bottom surface 21 a of the housing part 21A formed of the concave part, which houses the 1 st electrode group 2 and is formed in the exterior material 7, and the bottom surface 21a of the housing part 21B formed of the concave part, which houses the 2nd electrode group 3 and is formed in the exterior material, face each other. The 1 st region 7A and the 2nd region 7B are adhesively fixed by the adhesive fixing layer 41.

Also, when stacking the 1st region 7A and the 2nd region 7B, as shown in FIG. 24A, the positive electrode lead 4 connected to the positive electrode current collector tab 34 and the negative electrode lead 5 connected to the negative electrode current collector tab 35 are alternately arranged so as not to overlap with each other.

In this manner, in the present embodiment, the 1st region 7A and the 2nd region 7B are stacked such that the bottom surface 21a of the housing part 21A and the bottom surface 21a of the housing part 21B face each other, and the nonaqueous electrolyte secondary battery 200 is folded. Thus, the bending radius of the folded part of the exterior material 7 (the part in which the connecting lead 6 exists) is increased. The linking member 202 is inserted into the space formed by the folded part of the exterior material 7, and the 2 nonaqueous electrolyte secondary batteries 200 are linked by sharing this linking member 202.

As the linking member 202, it is possible to use a column-shaped metal member formed from copper, aluminum, an aluminum alloy, iron or stainless steel, etc.

Between the adjacent nonaqueous electrolyte secondary batteries 200, 200, the negative electrode lead 5 of one nonaqueous electrolyte secondary battery 200 and the positive electrode lead 4 of the other nonaqueous electrolyte secondary battery 200 are connected through the bus bar 201.

The bus bar 201 is a metal member and has electroconductivity.

In the assembled battery 190 of the present embodiment, the 2 adjacently arranged nonaqueous electrolyte secondary batteries 200 are linked by sharing this linking member 202, and these nonaqueous electrolyte secondary batteries 200 are connected in series. Thus, it is possible to reduce the size of the nonaqueous electrolyte secondary battery, and the degree of spatial freedom is improved when the nonaqueous electrolyte secondary battery is mounted in a motor vehicle, etc. Also, it is possible to efficiently release the heat generated during the charge and discharge of the nonaqueous electrolyte secondary battery 200 from the linking member 202.

Herein, the present embodiment describes the case in which the nonaqueous electrolyte secondary battery 200 is the nonaqueous electrolyte secondary battery 50 of the 2nd embodiment, but the present embodiment is not limited thereto. In the present embodiment, the nonaqueous electrolyte secondary battery 200 can be any of the nonaqueous electrolyte secondary battery 1 of the 1st embodiment, the nonaqueous electrolyte secondary battery 60 of the 3rd embodiment and the nonaqueous electrolyte secondary battery 70 of the 4th embodiment.

Also, the present embodiment describes the case in which the 1 st region 7A and the 2nd region 7B are stacked through the adhesive fixing layer 41, but the present embodiment is not limited thereto. In the present embodiment, the 1st region 7A and the 2nd region 7B can be stacked through the heat-releasing member.

### (Eleventh Embodiment)

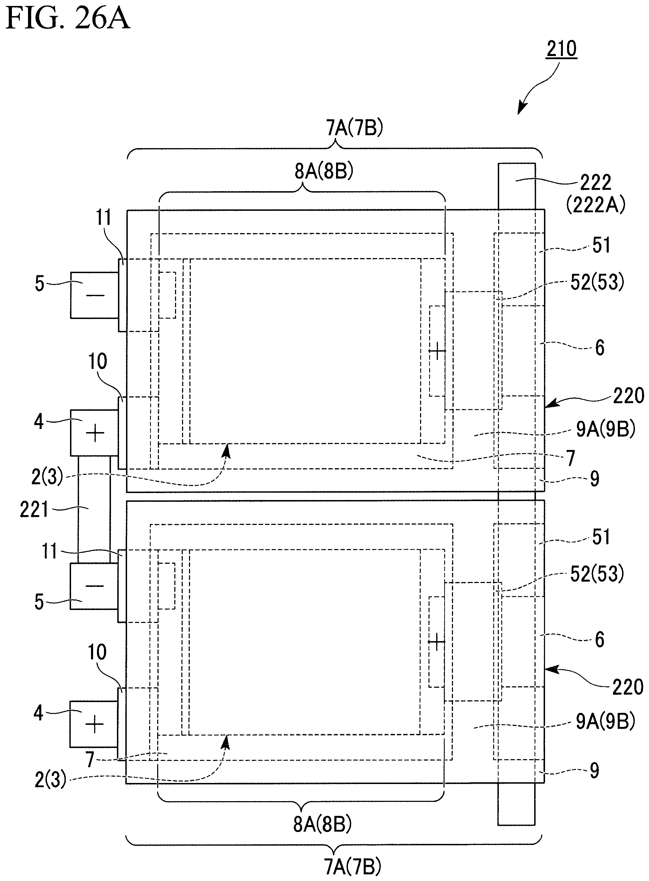

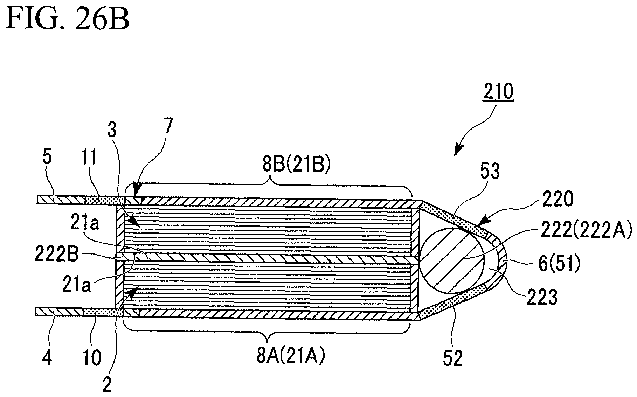

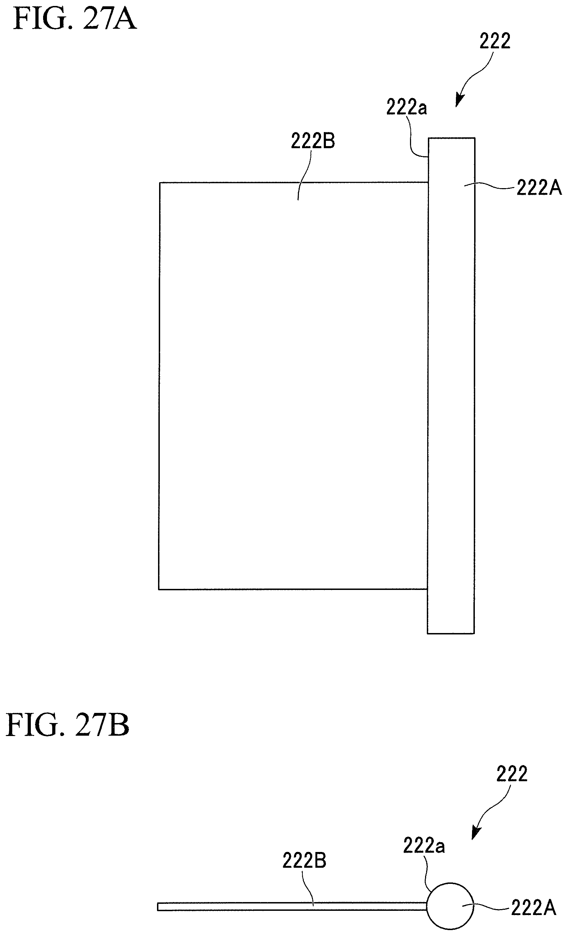

Hereinafter, the 11th embodiment is described with reference to FIG. 26A, FIG. 26B, FIG 27A and FIG. 27B.

In the following description, the same reference signs are assigned to the features which correspond to the features described in the 1 st embodiment with reference to FIG. 1A, FIG. 1B, FIG. 2 to FIG. 4, FIG. 5A, FIG. 5B, FIG. 6A, FIG. 6B, FIG. 7A, FIG. 7B, FIG. 8 and FIG. 9 and the features described in the 2nd embodiment with reference to FIG. 10A, FIG. 10B, FIG. 11A, FIG. 11B, FIG. 12A and FIG. 12B, and the detailed descriptions thereof are omitted. Also, the features, which are not illustrated in FIG. 26A, FIG. 26B, FIG. 27A and FIG. 27B, may be described by borrowing the reference signs illustrated in FIG. 1A, FIG. 1B, FIG. 2 to FIG. 4, FIG. 5A,FIG. 5B, FIG. 6A, FIG. 6B, FIG. 7A, FIG. 7B, FIG. 8, FIG. 9, FIG. 10A, FIG. 10B, FIG. 11 A, FIG. 11B, FIG. 12A and FIG. 12B.

The assembled battery 210 of the 11th embodiment includes, for example, the 2 nonaqueous electrolyte secondary batteries 220 comprised of the nonaqueous electrolyte secondary battery 50 of the 2nd embodiment, the bus bar 221 connecting these nonaqueous electrolyte secondary batteries 220 in series; and the linking member 222 linking the 2 nonaqueous electrolyte secondary batteries 220.

In the present embodiment, the 1st region 7A (1st housing part 8A) and the 2nd region 7B (2nd housing part 8B) are stacked through the heat-releasing part 222B of the linking member 222 in the nonaqueous electrolyte secondary battery 220 such that the bottom surface 21 a of the housing part 21 A formed of the concave part, which houses the 1st electrode group 2 and is formed in the exterior material 7, and the bottom surface 21a of the housing part 21B formed of the concave part, which houses the 2nd electrode group 3 and is formed in the exterior material, face each other.

As shown in FIG. 27A and FIG. 27B, for example, the linking member 222 includes the column-shaped linking part 222A and the heat-releasing part 222B provided vertically on the outer peripheral surface 222a of the linking part 222A.

Also, when stacking the 1st region 7A and the 2nd region 7B, as shown in FIG. 26A, the positive electrode lead 4 connected to the positive electrode current collector tab 34 and the negative electrode lead 5 connected to the negative electrode current collector tab 35 are alternately arranged so as not to overlap with each other.

In this manner, in the present embodiment, the 1 st region 7A and the 2nd region 7B are stacked such that the bottom surface 21 a of the housing part 21 A and the bottom surface 21a of the housing part 21B face each other, and the nonaqueous electrolyte secondary battery 200 is folded. Thus, the bending radius of the folded part of the exterior material 7 (the part in which the connecting lead 6 exists) is increased. The linking part 222A of the linking member 222 is inserted into the space formed by the folded part of the exterior material 7, and the 2 nonaqueous electrolyte secondary batteries 220 are linked by sharing this linking part 222A.

As the linking member 222, it is possible to use a metal member formed from copper, aluminum, an aluminum alloy, iron or stainless steel, etc.

Between the adjacent nonaqueous electrolyte secondary batteries 220, 220, the negative electrode lead 5 of one nonaqueous electrolyte secondary battery 220 and the positive electrode lead 4 of the other nonaqueous electrolyte secondary battery 220 are connected through the bus bar 221.

The bus bar 221 is a metal member and has electroconductivity.

In the assembled battery 210 of the present embodiment, the 2 adjacently arranged nonaqueous electrolyte secondary batteries 220 are linked by sharing this linking member 222, and these nonaqueous electrolyte secondary batteries 220 are connected in series. Thus, it is possible to reduce the size of the nonaqueous electrolyte secondary battery, and the degree of spatial freedom is improved when the nonaqueous electrolyte secondary battery is mounted in a motor vehicle, etc. Also, the 1st region 7A and the 2nd region 7B are stacked through the heat-releasing part 222B of the linking member 222, and thus, it is possible to efficiently release the heat generated during the charge and discharge of the nonaqueous electrolyte secondary battery 220 from the linking member 222.

Herein, the present embodiment describes the case in which the nonaqueous electrolyte secondary battery 220 is the nonaqueous electrolyte secondary battery 50 of the 2nd embodiment, but the present embodiment is not limited thereto. In the present embodiment, the nonaqueous electrolyte secondary battery 220 can be any of the nonaqueous electrolyte secondary battery 1 of the 1 st embodiment, the nonaqueous electrolyte secondary battery 60 of the 3rd embodiment and the nonaqueous electrolyte secondary battery 70 of the 4th embodiment.

### (Twelfth Embodiment)

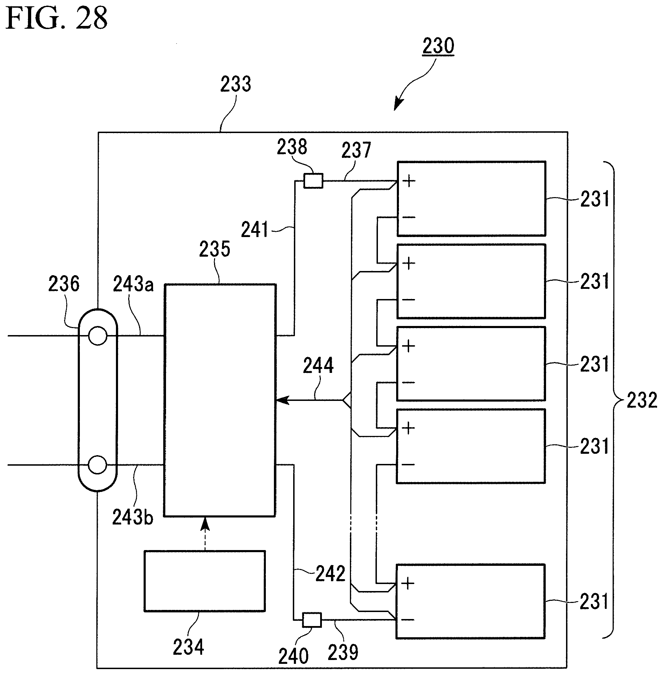

Hereinafter, the 12th embodiment is described with reference to FIG. 28.

The battery pack of the 12th embodiment includes at least one of the nonaqueous electrolyte secondary batteries of the 1st to 4th embodiments (i.e. single batteries). When the plurality of single batteries is included in the battery pack, the respective single batteries are arranged so as to be electrically connected in series, in parallel, or in series and parallel.

In the battery pack 230 of the 12th embodiment, for example, the nonaqueous electrolyte secondary battery 1 of the 1st embodiment is used as the single battery 231.

The plurality of single batteries 231 is laminated so that unillustrated negative electrode terminals and unillustrated positive electrode terminals extending to the outside are arranged in the same direction, and thus the assembled batteries 232 are configured by fastening with the adhesive tape. These single batteries 231 are connected mutually and electrically in series, as shown in FIG. 28.

The printed wiring board 233 is located so as to face the side surfaces of the single batteries 231 from which the negative electrode terminals and the positive electrode terminals extend. As shown in FIG. 28, the thermistor 234, the protective circuit 235 and the energization terminal 236 for an external device are mounted on the printed wiring board 233. Herein, an insulation plate (unillustrated) is mounted on the surface of the unillustrated protective circuit board facing the assembled batteries 232 in order to avoid unnecessary connection with wirings of the assembled batteries 232.

The positive electrode-side lead 237 is connected to the positive electrode terminal located in the lowermost layer of the assembled batteries 232, and the front end of the positive electrode-side lead is inserted into the positive electrode-side connector 238 of the printed wiring board 233 to be electrically connected. The negative electrode-side lead 239 is connected to the negative electrode terminal located in the uppermost layer of the assembled batteries 232, and the front end of the negative electrode-side lead is inserted into the negative electrode-side connector 240 of the printed wiring board 233 to be electrically connected. These positive electrode-side connector 238 and negative electrode-side connector 240 are connected to the protective circuit 235 via wires 241 and 242 formed in the printed wiring board 233.

The thermistor 234 is used to detect a temperature of the single battery 231. The thermistor is installed near the single batteries 231, and the detection signal thereof is transmitted to the protective circuit 235. The protective circuit 235 can block the plus-side wire 243a and the minus-side wire 243b between the protective circuit 235 and the energization terminal 236 for an external device under a predetermined condition. Here, for example, the predetermined condition means the case where the detection temperature of the thermistor 234 increases to a predetermined temperature or more. In addition, the predetermined condition also means the case of detecting an overcharge, overdischarge, overcurrent, or the like of the single battery 231. The detection of the overcharge or the like is performed for the respective single batteries 231 or the whole single batteries 231. Herein, when the overcharge or the like is detected in the respective single batteries 231, a battery voltage may be detected, or a positive electrode potential or a negative electrode potential may be detected. In the latter case, a lithium electrode, which is used as a reference electrode, is inserted into the respective single batteries 231. In the present embodiment, the wires 244 for voltage detection are connected to the respective single batteries 231, and detection signals are transmitted to the protective circuit 235 via the wires 244.

Also, unillustrated protective sheets formed from rubber or a resin are placed on three side surfaces of the assembled batteries 231 other than the side surface from which the positive electrode terminals and the negative electrode terminals protrude.

The assembled batteries 231 are housed together with the respective protective sheets and the printed wiring board 233 in an unillustrated housing container. In other words, the protective sheets are placed on both inner surfaces of the housing container in the longer side direction and the inner surface of the housing container in the shorter side direction, and the printed wiring board 233 is placed on the inner surface opposite to the protective sheet in the shorter side direction. The assembled batteries 231 are located in the space surrounded by the protective sheets and the printed wiring board 233. An unillustrated cover is mounted on the upper surface of the housing container.

To fix the assembled batteries 231, a thermal shrinkage tape may be used instead of the adhesive tape. In this case, protective sheets are placed on both side surfaces of the assembled batteries 232, the thermal shrinkage tape is circled, and then the thermal shrinkage tape is subjected to thermal shrinkage so that the assembled batteries are fastened.

Also, the single batteries 231 connected in series are shown in FIG. 28. However, in order to increase the battery capacity, the single batteries 231 may be connected in parallel or may be connected in a combination form of series connection and parallel connection. The assembled battery packs can also be further connected in series or in parallel.

### (Thirteenth Embodiment)

The 13th embodiment is described.

The 13th embodiment provides a motor vehicle including at least one set of the assembled batteries of the 5th to 11th embodiments or at least one battery pack of the 12th embodiment. Examples of a motor vehicle include a two-wheeled or four-wheeled hybrid electric vehicle, a two-wheeled or four-wheeled electric vehicle, and an assist bicycle.

In the motor vehicle of the 13th embodiment, for example, the assembled battery 80 of the 5th embodiment is mounted in the engine room. Herein, it is possible to mount the battery pack 230 of the 12th embodiment instead of the battery pack 80 of the 5th embodiment. By placing the assembled battery or the battery pack in the engine room of a motor vehicle which is a high-temperature environment, the distance between the battery pack and an electric driving system device such as a motor or an inverter is shortened. For this reason, the energy loss of input and output is reduced, and the fuel efficiency is improved.

The motor vehicle of the 13th embodiment includes at least one set of the assembled batteries of the 5th to 11th embodiments or at least one battery pack of the 12th embodiment. Thus, it is possible to provide the motor vehicle in which the nonaqueous electrolyte secondary battery having voltage compatibility with a conventional lithium ion battery is mounted, and the degree of spatial freedom is improved.

### [Examples]

### (Example 1)

The following procedure was used to produce the nonaqueous electrolyte secondary batteries corresponding to the nonaqueous electrolyte secondary battery 1 illustrated in FIG. 1A, FIG. 1B, FIG. 2 to FIG. 4, FIG. 5A and FIG. 5B.

### <Productions of Electrode Group 2 and Electrode Group 3>

### (Production of Positive Electrode)

As the positive electrode active material, the lithium iron phosphate (LiFePO₄) particles were prepared. The lithium iron phosphate has the olivine structure, and the primary particle of the lithium iron phosphate has the average particle size of 0.1 µm. Onto the surface of the lithium iron phosphate, the carbon microparticles having the average particle size of 5 nm adhered (adhesion amount: 1 mass%).

In the lithium iron phosphate (LiFePO₄ particles, graphite powder and PVdF were respectively added as an electroconductive agent and a binder at the mass ratio of 90:5:5. This mixture was dispersed in an n-methylpyrrolidone (NMP) solvent, and was subjected to a ball mill, to thereby prepare the slurry.

The obtained slurry was applied onto both surface of the positive electrode current collector formed of the aluminum foil having a thickness of 12 µm, and was dried and subjected to the hot press process, to thereby produce the positive electrode in which the thickness of the positive electrode material layer on one side is 30 µm and the electrode density is 2.2 g/cm³.

The aforementioned procedure was carried out to produce the stripe-shaped positive electrode including the positive electrode current collector, the positive electrode material layer supported on both surfaces thereof, and the positive electrode material-unsupported part.

### (Production of Negative Electrode)

As the negative electrode active material, the lithium titanate (Li₄Ti₅O₁₂) particles were prepared. The lithium titanate has the spinel structure in which the lithium insertion and extraction potential with respect to the electrode potential of a lithium metal is 2 V to 1.3 V (vs. Li/Li⁺), and the primary particle of the lithium titanate has the average particle size of 0.6 µm.

In the lithium titanate (Li₄Ti₅O₁₂) particles, graphite powder having the average particle size of 6 µm and PVdF were respectively added as an electroconductive agent and a binder at the mass ratio of 90:8:2. This mixture was dispersed in an n-methylpyrrolidone (NMP) solvent, and was subjected to a ball mill, to thereby prepare the slurry.

The obtained slurry was applied onto both surface of the negative electrode current collector formed of the aluminum foil having a thickness of 12 µm, and was dried and subjected to the hot press process, to thereby produce the negative electrode in which the thickness of the negative electrode material layer on one side is 20 µm and the electrode density is 2.2 g/cm³.

The aforementioned procedure was carried out to produce the stripe-shaped negative electrode including the negative electrode current collector, the negative electrode material layer supported on both surfaces thereof, and the negative electrode material-unsupported part.

### (Productions of Electrode Groups 2 and 3)

The separator formed from the regenerated cellulose fibers having the thickness of 15 µm, the porosity of 65% and the average fiber diameter 1 µm was prepared.

Next, the strip-shaped positive electrode 3 and the strip-shaped negative electrode 4 were laminated through the separator 5, to thereby form the electrode group assembly. At this time, the positive electrode material-unsupported part and the negative electrode material-unsupported part were arranged so as to extend from the electrode group assembly in the opposite direction to each other.

Subsequently, this electrode assembly was spirally wound, and then the winding core was removed therefrom. Then, the electrode assembly was pressed into a flat shape.

Next, a part of the positive electrode material-unsupported part was sandwiched by the positive electrode current collector tab. The positive electrode material-unsupported part and the positive electrode current collector tab were ultrasonically welded in this state. In the same manner, a part of the negative electrode material-unsupported part was sandwiched by the negative electrode current collector tab, and the negative electrode material-unsupported part and the negative electrode current collector tab were subjected to ultrasonic welding in this state.

Next, the part of the electrode group assembly, which is other than the positive electrode material-unsupported part, the positive electrode current collector tab, the negative electrode material-unsupported part and the negative electrode current collector tab, was coated with the insulating tape.

The aforementioned procedure was carried out to obtain the flat-shaped, spirally wound electrode groups 2, 3 as shown in FIG. 3.

### <Connection of Electrode Groups 2, 3 and Electrode Lead (Positive Electrode Lead and Negative Electrode Lead)>

Next, the positive electrode lead (electrode lead) and the negative electrode lead (electrode lead), which were formed from the aluminum plate having the thermoplastic resin layer 10, were prepared. Then, the prepared electrode lead (positive electrode lead) was ultrasonically welded to the positive electrode current collector tab of the electrode group 2. In the same manner, the prepared electrode lead (negative electrode lead) was ultrasonically welded to the negative electrode current collector tab of the electrode group 3. At this time, the positive electrode lead of the electrode group 2 and the negative electrode lead of the electrode group 3 were arranged so as not to exist on the same straight line with each other.

Subsequently, the connection lead 6 formed from the aluminum plate having the thermoplastic resin layer was prepared. Then, one end of the prepared connection lead 6 was ultrasonically welded to the negative electrode current collector tab of the electrode group 2, and the other end was ultrasonically welded to the positive electrode current collector tab of the electrode group 3.

### <Production of Nonaqueous Electrolyte Secondary Battery 1>

Next, the exterior material 7 as shown in FIG 2 was prepared. The exterior material 7 was the Al laminate film including the Al layer and the Al laminate film consisting of the resin layer covering the Al layer, and was comprised of the 1 st casing unit 21 and the 2nd casing unit 22. The exterior material 7 was subjected to the deep drawing process, to thereby form the housing part 21A and the housing part 21B which were rectangular concave parts.

Next, the electrode group 2 produced in the aforementioned procedure was placed in the housing part 21A of the 1st casing unit 21 in the exterior material 7.

Next, the electrode group 3 produced in the aforementioned procedure was placed in the housing part 21B of the 1 st casing unit 21 in the exterior material 7.

Next, the 1st casing unit 21 and the 2nd casing unit 22 of the exterior material 7 were arranged so as to face each other through the insulating resin layer. Through this arrangement, the electrode group 2 and the electrode group 3 were housed in the electrode group-housing part comprised of the housing part 21A and the housing part 21B of the 1st casing unit 21, and the housing part 22A and the housing part 22B of the 2nd casing unit 22 which faced these housing part 21 A and the housing part 21B.

Next, the 2nd casing unit 22 was folded at the folding part 23, and the 1st casing unit 21 and the 2nd casing unit 22 were stacked so as to face each other and to sandwich and fix the electrode lead (positive electrode lead) of the electrode group 2, the electrode lead (negative electrode lead) of the electrode group 3 and the connection lead 6 through the thermoplastic resin layer 10.

Next, the part connecting the 1 st housing part 7A and the 2nd housing part 7B in the outer peripheral parts of the 1st casing unit 21 and the 2nd casing unit 22 were heated and heat-sealed to thereby heat-seal the connection lead 6 through the thermoplastic resin layer.

Also, the sealing part 21D and the sealing part 22D, which were the outer peripheral parts of the 1st casing unit 21 and the 2nd casing unit 22 were heated and heat-sealed except for the sides of the respective casing units 21,22 adjacent in parallel with the folding part, to thereby heat-seal the electrode lead (positive electrode lead) of the electrode group 2 and the electrode lead (negative electrode lead) of the electrode group 3 through the thermoplastic resin layer.

In this manner, the electrode group 2 and the electrode group 3 were housed in the exterior material, and the vacuum drying was carried out at 80°C for 24 hours.

### <Preparation of Nonaqueous Electrolyte>

LiPF₆ (electrolyte) was dissolved in the mixed solvent (organic solvent) of propylene carbonate (PC) and diethyl carbonate (DEC) (volume ratio of 1:2) at the concentration of 1.2 mol/L, to thereby prepare the liquid nonaqueous electrolyte.

### <Injection of Nonaqueous Electrolyte and Completion of Nonaqueous Electrolyte Secondary Battery>

The liquid nonaqueous electrolyte obtained in the aforementioned procedure was injected through the thermally unsealed part of the sealing part 21D and the sealing part 22D which were the outer peripheral parts of the 1st casing unit 21 and the 2nd casing unit 22 in the exterior material 7.

Finally, the thermally unsealed part of the sealing part 21D and the sealing part 22D, which were the outer peripheral parts of the 1st casing unit 21 and the 2nd casing unit 22 in the exterior material 7, was heat-sealed to thereby obtain the nonaqueous electrolyte secondary battery 1 of Example 1 having the capacity of 10 Ah.

### (Example 2)

Regarding the nonaqueous electrolyte secondary battery 1 produced in Example 1, the nonaqueous electrolyte secondary battery 1 was folded so as to stack the 1 st region 7A and the 2nd region 7B as shown in FIG. 5A and FIG. 5B. At this time, the 1st region 7A and the 2nd region 7B were adhesively fixed by the adhesive fixing layer 41 formed from the double-sided tape.

### (Example 3)

Regarding the nonaqueous electrolyte secondary battery 1 produced in Example 1, the nonaqueous electrolyte secondary battery 1 was folded so as to stack the 1st region 7A and the 2nd region 7B as shown in FIG. 6A and FIG. 6B. At this time, the heat-releasing member 42 was provided between the 1st region 7A and the 2nd region 7B so as to adhesively fix them.

### (Example 4)

The nonaqueous electrolyte secondary battery 60 of the 3rd embodiment shown in FIG. 13A and FIG. 13B was produced. The nonaqueous electrolyte secondary battery 60 was produced in the same manner as in Example 3 except that the opening part was formed in the connection part and the connection lead 6 was exposed through the opening part.

### "Measurement of Average Discharge Voltage"

The nonaqueous electrolyte secondary batteries of Examples 1-4 were charged at 25°C and a constant current of 10A (1C) to 4.2 V, and then were discharged at the current value of 10A (1C) to 3.0 V. In this discharge process, the average discharge voltages were measured.

As shown in the results of Table 1, the average discharge voltages of Examples 1-4 were respectively 3.62 V, 3.61 V, 3.61 V and 3.62V. Thus, it could be confirmed that the nonaqueous electrolyte secondary batteries had the voltage compatibility with a conventional lithium ion battery in which a carbon material was used for a negative electrode. Accordingly, it is possible to interchange the protective circuit for overcurrent protection, overcharge prevention and overdischarge prevention which is used for a conventional lithium ion battery.

**[Table 1]**

| | Average Discharge Voltage (V) |
|---|---|
| Example 1 | 3.62 |
| Example 2 | 3.61 |
| Example 3 | 3.61 |
| Example 4 | 3.62 |

### [Evaluation of Heat-Releasing Property of Cell]

Next, each of the nonaqueous electrolyte secondary batteries of Examples 2 to 4 was charged at 25°C and a constant current of 10A (1C) to 4.2 V, and then was discharged at the current value of 100 A (10C) to 3.0 V. The increase in the temperature of the cell surface was examined during this process.

As a result, it was confirmed that the increase in the cell temperature was large in the order of Example 2, Example 3 and Example 4. Also, it was found that the generated heat could be efficiently released in the order of Example 2 < Example 3 < Embodiment 4.

Also, in Example 2 to Example 4 using the structure in which the nonaqueous electrolyte secondary battery was folded, the lengths in the longitudinal length of the nonaqueous electrolyte secondary batteries were reduced by half, and thus, it was confirmed that the degree of spatial freedom was improved when the nonaqueous electrolyte secondary battery was mounted in a motor vehicle.

### (Example 5)

The nonaqueous electrolyte secondary battery 1 produced in Example 2 was housed in the outer can formed from aluminum, to thereby produce the nonaqueous electrolyte secondary battery shown in the 3rd example of the folding form of the nonaqueous electrolyte secondary battery 1 shown in FIG. 7A and FIG. 7B.

Next, 50 pieces of the produced nonaqueous electrolyte secondary batteries were subjected to the drop test in which the sample was dropped from the height of 1.2 m, and then, the damaged conditions were examined.

As a result, it was found that there were no damaged battery, and each of the batteries could function as a battery.

While certain embodiments have been described, these embodiments have been presented by way of example only, and are note intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A nonaqueous electrolyte secondary battery comprising:
a 1st electrode group and a 2nd electrode group which are obtained by laminating a positive electrode containing an iron-containing phosphorus compound which has an olivine structure and is represented by LiₓFe_{1-y}Mn_{y}AₓPO₄ (A represents at least one selected from the group consisting of V, Mg, Ni, Al, Sn, Zr and Nb, 0≤x≤1.1, 0≤y≤0.2, and 0≤z≤0.2), a negative electrode containing a titan-containing oxide, and a separator interposed between the positive electrode and the negative electrode;
a nonaqueous electrolyte;
an exterior material which encloses the 1 st electrode group, the 2nd electrode group and the nonaqueous electrolyte;
a positive electrode lead which is connected to a positive electrode of the 1st electrode group and extends to an outside of the exterior material;
a negative electrode lead which is connected to a negative electrode of the 2nd electrode group and extends to an outside of the exterior material; and
a connection lead which connects a negative electrode of the 1 st electrode group and a positive electrode of the 2nd electrode group, wherein
the exterior material comprises a 1 st housing part which houses the 1 st electrode group, a 2nd housing part which houses the 2nd electrode group, and a connection part which connects the 1 st housing part and the 2nd housing part.

2. The nonaqueous electrolyte secondary battery according to claim 1, wherein a region, which includes the connection part between the 1 st housing part and the 2nd housing part, is foldable.

3. The nonaqueous electrolyte secondary battery according to claim 1, wherein the connection part is a common sealing part which collectively seals the 1 st housing part and the 2nd housing part.

4. The nonaqueous electrolyte secondary battery according to claim 1, wherein the connection part is provided with a 1st sealing part which seals the 1st housing part, a 2nd sealing part which seals the 2nd housing part, and an unsealed part provided between the 1st sealing part and the 2nd sealing part.

5. The nonaqueous electrolyte secondary battery according to claim 4, wherein an opening part exposing the connection lead is formed at the unsealed part.

6. The nonaqueous electrolyte secondary battery according to any one of claims 1-5, wherein a 1 st region and a 2nd region are stacked such that a 1 st cap part covering a concave part, which houses the 1 st electrode group and is formed in the exterior material, and a 2nd cap part covering a concave part, which houses the 2nd electrode group and is formed in the exterior material, face each other.

7. The nonaqueous electrolyte secondary battery according to any one of claims 1-5, wherein a 1 st region and a 2nd region are stacked such that a bottom surface of a concave part, which houses the 1st electrode group and is formed in the exterior material, and a bottom surface of a concave part, which houses the 2nd electrode group and is formed in the exterior material, are faced to each other.

8. The nonaqueous electrolyte secondary battery according to any one of claims 1-7, wherein a 1st region and a 2nd region are stacked through a heat-releasing member.

9. The nonaqueous electrolyte secondary battery according to any one of claims 1-8, wherein the titan-containing oxide contains at least one selected from the group consisting of a lithium titanium oxide having a ramsdellite structure, a lithium titanium oxide having a spinel structure, a titanium oxide having a monoclinic structure, and a niobium titanium oxide.

10. The nonaqueous electrolyte secondary battery according to any one of claims 1-9, wherein the exterior material is a multilayer film including a metal layer and a resin layer covering the metal layer.

11. The nonaqueous electrolyte secondary battery according to any one of claims 1-10 which has an average discharge voltage of about 3.6 V at a charge maximum voltage within a range of 4 V or more and 5 V or less.

12. An assembled battery comprising a linking member which is inserted into a space formed by the exterior material between the 1st region and the 2nd region when the exterior material is folded so as to stack the 1st region and the 2nd region, wherein
the plural nonaqueous electrolyte secondary batteries according to any one of claims 1-11 are linked by sharing the linking member.

13. A battery pack comprising the nonaqueous electrolyte secondary battery according to any one of claims 1-11 or the assembled battery according to claim 12.
